(19) Europäisches Patentamt / European Patent Office / Office européen des brevets

(11) **EP 4 190 212 A1**

(12) **EUROPÄISCHE PATENTANMELDUNG**

(43) Veröffentlichungstag:
07.06.2023  Patentblatt 2023/23

(21) Anmeldenummer: 23153370.4

(22) Anmeldetag: **15.10.2019**

(51) Internationale Patentklassifikation (IPC):
*A47J 36/32* (2006.01)   *A47J 43/07* (2006.01)

(52) Gemeinsame Patentklassifikation (CPC):
**A47J 36/32; A47J 43/0716**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(62) Dokumentnummer(n) der früheren Anmeldung(en) nach Art. 76 EPÜ:
**19203209.2 / 3 808 235**

(71) Anmelder: **Vorwerk & Co. Interholding GmbH 42275 Wuppertal (DE)**

(72) Erfinder:
- **Tietz, Sebastian**
  **51379 Leverkusen (DE)**
- **Kraut-Reinkober, Stefan**
  **51375 Leverkusen (DE)**
- **Schmitz, Kevin**
  **42781 Haan (DE)**
- **Lang, Torsten**
  **42657 Solingen (DE)**
- **Weber, Martin**
  **42109 Wuppertal (DE)**
- **Diel, Maria**
  **42799 Leichlingen (DE)**

(74) Vertreter: **Von Rohr Patentanwälte Partnerschaft mbB Rüttenscheider Straße 62 45130 Essen (DE)**

Bemerkungen:
Diese Anmeldung ist am 26-01-2023 als Teilanmeldung zu der unter INID-Code 62 erwähnten Anmeldung eingereicht worden.

(54) **KÜCHENMASCHINE UND VERFAHREN ZUM BETREIBEN EINES HEIZSYSTEMS**

(57)    Es werden ein Verfahren zum Betreiben eines elektrischen Heizsystems einer Küchenmaschine und eine Küchenmaschine zur Durchführung des Verfahrens vorgeschlagen, wobei eine Messtemperatur des Heizsystems mittels eines Temperaturelements ermittelt wird, um eine Kalibrierung eines Heizelements durchzuführen und/oder die Messtemperatur mit einer mittels des Heizelements ermittelten Heiztemperatur des Heizelements zur Identifikation eines kritischen Heizzustands zu vergleichen.

Fig. 1

EP 4 190 212 A1

## Beschreibung

Die vorliegende Erfindung betrifft ein Verfahren zum Betreiben eines Heizsystems einer Küchenmaschine gemäß dem Oberbegriff des Anspruchs 1 und eine Küchenmaschine zur Zubereitung von Speisen.

Es ist bei elektrisch betriebenen Küchenmaschinen bekannt, zur Zubereitung von Speisen ein Lebensmittel in einem Gefäß mittels eines elektrischen Heizsystems zu erhitzen, wobei eine (Ziel-)Temperatur des Heizsystems als Führungsgröße vorgegeben und eine Temperatur als Regelgröße gemessen wird, um das Heizsystem zu regeln.

Bei dem Erhitzen des Lebensmittels kann es beispielsweise durch Inhomogenitäten des Lebensmittels oder eine Schiefstellung der Küchenmaschine zu lokal unterschiedlichen Wärmeübertragungsvorgängen vom Heizsystem auf das Lebensmittel und somit zu lokalen Temperaturveränderungen kommen. Starke lokale Temperaturerhöhungen, sogenannte Hotspots, können nicht nur zu einem Anbrennen des Lebensmittels und somit einer Beeinträchtigung des Kochergebnisses führen, sondern auch die Küchenmaschine beschädigen.

Vor diesem Hintergrund offenbart die EP 3 513 698 A1 ein Verfahren zum Betreiben eines Heizsystems einer Küchenmaschine, bei dem der elektrische Widerstand eines Heizelements des Heizsystems ermittelt wird, um eine lokale Temperaturveränderung des Heizelements zu identifizieren.

Der vorliegenden Erfindung liegt die Aufgabe zugrunde, ein verbessertes Verfahren zum Betreiben eines Heizsystems einer Küchenmaschine und eine verbesserte Küchenmaschine zur Zubereitung von Speisen anzugeben, das bzw. die eine sicherere Zubereitung von Speisen und/oder eine präzisere bzw. zuverlässige Identifikation von kritischen Heizzuständen bzw. lokalen Temperaturveränderungen ermöglicht oder unterstützt.

Die der Erfindung zugrunde liegende Aufgabe wird durch ein Verfahren gemäß Anspruch 1 oder eine Küchenmaschine gemäß Anspruch 15 gelöst. Vorteilhafte Weiterbildungen sind Gegenstand der Unteransprüche.

Die vorschlagsgemäße Küchenmaschine ist eine elektrisch betriebene, insbesondere multifunktionale, Vorrichtung zur Zubereitung von Speisen bzw. zur Bearbeitung, insbesondere zum Erhitzen, Zerkleinern und/oder Mischen, von Lebensmitteln.

Zu diesem Zweck weist die vorschlagsgemäße Küchenmaschine ein optionales Gefäß für das Lebensmittel, ein elektrisches Heizsystem zum Erhitzen des Lebensmittels und/oder einen Rührer zum Umrühren bzw. Mischen und/oder Zerkleinern des Lebensmittels auf.

Die Küchenmaschine kann jedoch auch eine sonstige Maschine zur Bearbeitung, insbesondere Erhitzen, von Lebensmitteln sein, wie ein Herd, ein Backofen, eine Mikrowelle und/oder ein Toaster.

Bei der vorschlagsgemäßen Küchenmaschine ist das Heizsystem vorzugsweise zumindest teilweise in das Gefäß, insbesondere einen Boden des Gefäßes, integriert. Es ist jedoch auch möglich, das Heizsystem der vorschlagsgemäßen Küchenmaschine in einer separaten Vorrichtung, wie einer Basisstation, anzuordnen, um das Gefäß zu erhitzen.

Das Heizsystem der vorschlagsgemäßen Küchenmaschine weist vorzugsweise eine Heizplatte, ein elektrisches Heizelement bzw. einen elektrischen Leiter zur Erzeugung von Wärmeenergie bzw. zum Erhitzen der Heizplatte, eine Messeinrichtung zum Ermitteln des elektrischen Widerstands des Heizelements und/oder ein Temperaturelement zum Ermitteln einer Messtemperatur insbesondere der Heizplatte und/oder des Gefäßes auf.

Das Heizelement ist vorzugszugsweise als Heizwiderstand, besonders bevorzugt als Thermistor, insbesondere als Heißleiter oder Kaltleiter, ausgebildet.

Der elektrische Widerstand, im Folgenden kurz Widerstand genannt, des Heizelements ist temperaturabhängig bzw. ändert sich mit einer sich ändernden Temperatur des Heizelements.

Bei einem Kaltleiter bzw. PTC-Widerstand steigt der Widerstand mit zunehmender (mittlerer) Temperatur des Kaltleiters. Ein Kaltleiter bzw. PTC-Widerstand weist folglich einen positiven Temperaturkoeffizienten auf.

Bei einem Heißleiter bzw. NTC-Widerstand sinkt der Widerstand mit zunehmender (mittlerer) Temperatur des Heißleiters. Ein Heißleiter bzw. NTC-Widerstand weist folglich einen negativen Temperaturkoeffizienten auf.

Es ist deshalb möglich und bei dem vorschlagsgemäßen Verfahren vorgesehen, durch (messtechnische) Ermittlung des Widerstands des Heizelements die (mittlere) Temperatur des Heizelements, im Folgenden Heiztemperatur genannt, zu bestimmen, insbesondere mittels einer Messeinrichtung und/oder um das Heizsystem zu regeln.

Aufgrund von Fertigungstoleranzen ist die Abhängigkeit zwischen dem Widerstand und der Temperatur gerätespezifisch. Deshalb ist die Abhängigkeit vorzugsweise für jedes Heizsystem bzw. jede Küchenmaschine individuell durch eine Kalibrierung zu bestimmen. Darüber hinaus kann sich die Abhängigkeit beispielsweise durch den Geräteverschleiß mit der Zeit verändern, sodass eine erneute Kalibrierung erforderlich ist, um anhand des Widerstands das Heizsystem zu regeln bzw. die Heiztemperatur zuverlässig zu bestimmen.

Es ist gemäß einer ersten Verfahrensvariante des vorschlagsgemäßen Verfahrens vorgesehen, zusätzlich zur Heiztemperatur eine (lokale) Messtemperatur des Heizsystems, insbesondere der Heizplatte, mittels eines (separaten) Temperaturelements zu ermitteln, um eine Kalibrierung des Heizsystems, insbesondere des Heizelements, zur Bestimmung der Heiztemperatur mittels des elektrischen Widerstands durchzuführen.

Gemäß der ersten Verfahrensvariante wird mittels des Temperaturelements eine Kalibrierung des Heizsystems, insbesondere des Heizelements, durchgeführt, vorzugsweise um anschließend - insbesondere ausschließlich bzw. ohne Verwendung des Temperaturelements - anhand des Widerstands des Heizelements die Heiztemperatur zu bestimmen bzw. das Heizelements als insbesondere flächig messendes Widerstandsthermometer zu verwenden.

Bei der Kalibrierung wird vorzugsweise ein (erster) elektrischer Widerstandswert des Heizelements bzw. ein (erster) Widerstandsreferenzwert einem dazu korrespondierenden (ersten) Heiztemperaturwert des Heizelements bzw. einem (ersten) Heiztemperaturreferenzwert zugeordnet, vorzugsweise wobei der Widerstandswert mittels der Messeinrichtung und der Heiztemperaturwert mittels des Temperaturelements bzw. eines Messtemperaturwerts des Temperaturelements bestimmt wird.

Besonders bevorzugt werden bei der Kalibrierung mehrere (unterschiedliche) elektrische Widerstandswerte des Heizelements zu korrespondierenden Heiztemperaturwerten des Heizelements zugeordnet, um einen Temperaturkoeffizienten des Heizelements zu bestimmen.

Es ist insbesondere vorgesehen, einen (zweiten) elektrischen Widerstandswert des Heizelements bzw. einen (zweiten) Widerstandsreferenzwert einem dazu korrespondierenden (zweiten) Heiztemperaturwert des Heizelements bzw. einem (zweiten) Heiztemperaturreferenzwert zuzuordnen, vorzugsweise um mittels der Wertepaare den Temperaturkoeffizienten zu bestimmen.

Auf diese Weise bzw. mittels der Widerstandswerte und Heiztemperaturwerte ist es möglich, den Zusammenhang bzw. die Korrelation zwischen dem elektrischen Widerstand des Heizelements und der Heiztemperatur mathematisch abzubilden bzw. herzustellen und vorzugsweise elektronisch - beispielsweise als Funktionsgleichung und/oder Tabelle - in einem Datenspeicher der Küchenmaschine zu hinterlegen.

Die Verwendung des Temperaturelements ermöglicht somit eine einfache Kalibrierung des Heizsystems bzw. der Küchenmaschine, insbesondere vor Ort bzw. durch einen Nutzer und/oder unabhängig von zusätzlichen (externen) Messgeräten. Darüber hinaus kann die Kalibrierung mehrfach, beispielsweise für jeden Kochvorgang, und/oder nach einer gewissen Zeitspanne wiederholt werden.

Unter dem Begriff "Kalibrierung" im Sinne der vorliegenden Erfindung ist vorzugsweise ein (unabhängiger) Verfahrensschritt zu verstehen, bei dem ein oder mehrere insbesondere durch eine Messeinrichtung ermittelte Widerstandswerte des Heizelements einem oder mehreren durch das Temperaturelement ermittelten Heiztemperaturwerten zugeordnet werden, insbesondere um anschließend - ausschließlich bzw. ohne Einsatz des Temperaturelements - den Widerstand des Heizelements zur Bestimmung der Heiztemperatur zu verwenden.

Gemäß einer zweiten, auch unabhängig durchführbaren Verfahrensvariante wird - insbesondere im Heizbetrieb bzw. während der Verwendung der Küchenmaschine - die mittels des Temperaturelements ermittelte Messtemperatur mit der mittels des Heizelements bestimmten Heiztemperatur - insbesondere automatisch, kontinuierlich und/oder in Intervallen - verglichen, um einen kritischen/ungewollten Heiz- bzw. Kochzustand, insbesondere eine lokale Temperaturveränderung des Heizelements, zu identifizieren.

Auf diese Weise wird eine im Vergleich zum Stand der Technik besonders präzise bzw. zuverlässige Identifikation von kritischen Heizzuständen bzw. lokalen Temperaturerhöhungen ermöglicht.

Eine lokale Temperaturerhöhung kann nämlich zu einer ähnlichen oder identischen Änderung des Widerstands des Heizelements führen wie eine geringfügig gleichmäßige Temperaturerhöhung des Heizelements, sodass die ausschließlich mittels des Widerstands bestimmte Heiztemperatur keine zuverlässigen Rückschlüsse auf eine lokale Temperaturveränderung erlaubt.

Ein kritischer/ungewollter Heiz- bzw. Kochzustand, im Folgenden kritischer Heizzustand genannt, im Sinne der vorliegenden Erfindung ist ein Zustand des Heizsystems bzw. der Küchenmaschine, bei dem eine lokale Temperaturveränderung, insbesondere Temperaturerhöhung und/oder Temperaturabsenkung, des Heizelements im Vergleich zu der sonstigen (durchschnittlichen) Temperatur bzw. Temperaturverteilung des Heizelements vorliegt. Beispielsweise liegt ein kritischer Heizzustand bzw. eine lokale Temperaturveränderung vor, wenn die Temperatur des Heizelements an einer Stelle um mehr als 5 °C, 10 °C oder 30 °C im Vergleich zu der unmittelbaren Umgebung der Stelle - insbesondere für einen vordefinierten Zeitraum, beispielsweise von mehr als 5 Sekunden oder 10 Sekunden - abweicht.

Die Identifikation des kritischen Heizzustands erfolgt vorzugsweise anhand eines oder mehrerer vordefinierter Kriterien, bei denen die Heiztemperatur und die Messtemperatur - insbesondere automatisch, mathematisch, messtechnisch und/oder unmittelbar oder mittelbar - miteinander verglichen werden. Insbesondere liegt ein bzw. der kritische Heizzustand vor, wenn ein oder mehrere Kriterien - besonders bevorzugt zeitgleich und/oder über einen vordefinierten Zeitraum - erfüllt sind.

Bei einem ersten Kriterium (Steigungskriterium) wird vorzugsweise der Gradient der Heiztemperatur mit dem Gradienten der Messtemperatur verglichen, um einen kritischen Heizzustand zu identifizieren. Insbesondere wird die Differenz der Gradienten der Heiztemperatur und der Messtemperatur gebildet und mit einem vordefinierten Grenzwert, beispielsweise in Höhe von 2 °C/s oder 3 °C/s, verglichen.

Liegt der Gradient der Heiztemperatur (deutlich), beispielsweise um mehr als 2 °C/s, und/oder für einen längeren Zeitraum, beispielsweise von mehr als 5 Sekunden, über dem Gradienten der Messtemperatur bzw. wird der vordefinierte Grenzwert überschritten, ist das erste Kriterium erfüllt bzw. liegt eine lokale Temperaturerhöhung des Heizelements vor, die nur von dem Heizelement bzw. nicht oder zu spät von dem Temperaturelement erfasst wird.

Bei einem zweiten Kriterium (Differenzkriterium) wird die Differenz der Heiztemperatur und der Messtemperatur gebildet und mit einem vordefinierten Grenzwert verglichen, um einen kritischen Heizzustand zu identifizieren.

Liegt die Differenz der Heiztemperatur und der Messtemperatur - insbesondere für einen längeren Zeitraum, beispielsweise von mehr als 5 Sekunden - über dem definierten Grenzwert, beispielsweise 20 °C, 40 °C oder 60 °C, ist das zweite Kriterium erfüllt bzw. liegt eine lokale Temperaturerhöhung des Heizelements vor.

Bei einem dritten Kriterium (Absoluttemperaturkriterium) werden/wird die Heiztemperatur und/oder die Messtemperatur (jeweils) mit einem (jeweiligen) vordefinierten Grenzwert, beispielsweise 150 °C, 200 °C oder 240 °C, verglichen, um einen kritischen Heizzustand zu ermitteln. Das dritte Kriterium kann insbesondere auch zur Überprüfung der zwei vorgenannten Kriterien angewandt werden.

Die vorgenannten Kriterien können grundsätzlich unabhängig voneinander oder in beliebiger Kombination verwendet werden, um einen kritischen Heizzustand zu identifizieren.

Gemäß einer besonders bevorzugten Verfahrensvariante wird bzw. werden das Kriterium bzw. die Kriterien, insbesondere die Sensitivität der Kriterien, und/oder der Grenzwert bzw. die Grenzwerte rezeptspezifisch, insbesondere in Abhängigkeit von den zuzubereitenden Lebensmitteln bzw. Lebensmittelklassen und/oder der Betriebsweise des Heizsystems bzw. der Küchenmaschine, angepasst. Beispielsweise kann bei einem Rezept, das eine hohe Wärmeleistung erfordert, die Differenz zwischen den Gradienten der Messtemperatur und der Heiztemperatur und/oder die Differenz zwischen der Messtemperatur und der Heiztemperatur größer sein als bei Rezepten, die eine geringere Wärmeleistung erfordern, ohne dass ein oder mehrere Kriterien als erfüllt zu erachten sind bzw. ohne dass dies als ein kritischer Heizzustand zu identifizieren ist. Folglich können die Grenzwerte bei einem derartigen Rezept (automatisch) angepasst werden.

Gemäß einer weiteren, besonders bevorzugten und auch unabhängig realisierbaren Verfahrensvariante wird eine erste Messtemperatur des Heizsystems mittels eines ersten Temperaturelements und eine zweite Messtemperatur des Heizsystems mittels eines zweiten (separaten) Temperaturelements ermittelt, um die Heiztemperatur mit mehreren Messtemperaturen bzw. der ersten und der zweiten Messtemperatur zur Identifikation des kritischen Heizzustands zu vergleichen. Auf diese Weise ist es möglich, (auch) eine lokale Temperaturveränderung zu identifizieren, die in unmittelbarer Nähe zu einem der Temperaturelemente auftritt und somit durch einen Vergleich der Heiztemperatur mit der Messtemperatur des betroffenen Temperaturelements nicht identifiziert werden kann.

Insbesondere um zu verhindern, dass sich die auf diese Weise identifizierte lokale Temperaturveränderung negativ auf den Betrieb der Küchenmaschine bzw. die Zubereitung der Lebensmittel auswirkt, kann bei bzw. (unmittelbar) nach Identifizierung des kritischen Heizzustands der Betrieb der Küchenmaschine, insbesondere des Heizsystems, (automatisch) angepasst werden.

Vorzugsweise kann bei bzw. (unmittelbar) nach Identifizierung des kritischen Heizzustands ein Rührvorgang mittels des Rührers und/oder ein Heizvorgang mittels des Heizsystems durchgeführt, gestartet, beendet und/oder angepasst werden.

Beispielsweise ist es möglich, bei Identifizierung des kritischen Heizzustands zur Vergleichmäßigung der Temperaturen den Rührer der Küchenmaschine zu aktivieren und somit den Rührvorgang auszuführen.

Zusätzlich oder alternativ kann die Wärmeleistung des Heizsystems reduziert oder das Heizen mittels des Heizsystems unterbrochen werden.

Auf diese Weise werden bei bzw. (unmittelbar) nach Identifizierung des kritischen Heizzustands insbesondere automatisch Maßnahmen getroffen, um eine Beschädigung der Lebensmittel und/oder der Küchenmaschine zu verhindern.

Vorzugsweise wird automatisch überprüft/verifiziert, ob die getroffenen Maßnahmen bzw. die Anpassung des Betriebs der Küchenmaschine, insbesondere des Heizsystems, erfolgreich war, also zu einer Vergleichmäßigung der Temperaturen geführt hat.

Es ist folglich bei dem vorschlagsgemäßen Verfahren vorgesehen, eine Validierung bzw. Plausibilitätsprüfung der vorgenommenen Maßnahmen durchzuführen und in Abhängigkeit von dem Ergebnis die Kriterien bzw. Grenzwerte und/oder die Maßnahmen anzupassen.

Erfolgt beispielsweise keine Annäherung der Heiztemperatur und der Messtemperatur durch einen Rührvorgang, so kann ein Fehlalarm beispielsweise durch eine fehlerhafte Kalibrierung und/oder zu sensitive Kriterien vorliegen. In diesem Fall kann (automatisch) eine erneute Kalibrierung vorgenommen werden.

Zusätzlich oder alternativ ist es möglich, die Grenzwerte bzw. Kriterien entsprechend zu korrigieren, um die Sensitivität zu reduzieren. Auch ist es möglich, den Vergleich der Heiztemperatur und der Messtemperatur für den aktuellen Zubereitungsvorgang zu ignorieren bzw. abzuschalten.

Ist die Annäherung der Heiztemperatur und der Messtemperatur zu langsam, können ein oder mehrere Maßnahmen angepasst und/oder miteinander kombiniert werden. Beispielsweise kann die Wärmeleistung stärker reduziert, der Rührvorgang länger und/oder mit höherer Drehzahl durchgeführt und/oder eine zusätzliche Maßnahme getroffen werden.

Ist die Annäherung der Heiztemperatur und der Messtemperatur hingegen zu schnell, kann beispielsweise die Wärmeleistung weniger stark reduziert, der Rührvorgang kürzer und/oder mit geringerer Drehzahl durchgeführt und/oder eine Maßnahme vollständig weggelassen werden.

Gemäß einem weiteren, auch unabhängig realisierbaren Aspekt der vorliegenden Erfindung werden eine mittels eines Temperaturelements eines Heizsystems ermittelte Messtemperatur und eine mittels eines Heizelements des Heizsystems, insbesondere eines Kaltleiters, ermittelte Heiztemperatur zur Identifikation eines kritischen Heizzustands des Heizsystems verwendet, bei dem das Heizelement des Heizsystems eine lokale Temperaturveränderung aufweist. Auf diese Weise werden entsprechende Vorteile realisiert.

Die vorgenannten Aspekte, Merkmale und Verfahrensschritte bzw. -varianten der Erfindung sowie die sich aus den Ansprüchen und der nachfolgenden Beschreibung ergebenden Aspekte, Merkmale und Verfahrensschritte bzw. -varianten der vorliegenden Erfindung können grundsätzlich unabhängig voneinander, aber auch in beliebiger Kombination bzw. Reihenfolge realisiert werden.

Weitere Aspekte, Vorteile, Merkmale und Eigenschaften der vorliegenden Erfindung ergeben sich aus den Ansprüchen und der nachfolgenden Beschreibung einer bevorzugten Ausführungsform anhand der Figuren. Es zeigt:

Fig. 1    eine schematische Seitenansicht einer vorschlagsgemäßen Küchenmaschine mit einem vorschlagsgemäßen Heizsystem zum Erhitzen eines Zubereitungsraums;

Fig. 2    eine perspektivische Ansicht des Heizsystems gemäß Fig. 1;

Fig. 3    ein schematisches Ablaufdiagramm eines vorschlagsgemäßen Verfahrens;

Fig. 4    ein schematisches Diagramm mit einem exemplarischen Verlauf einer Heiz- und Messtemperatur des Heizsystems beim Erhitzen von Wasser;

Fig. 5    ein schematisches Diagramm mit einem exemplarischen Verlauf der Heiz- und Messtemperatur beim Erhitzen von Wasser mit lokal trockenen Stellen auf einer Heizplatte des Heizsystems;

Fig. 6    ein schematisches Diagramm mit einem exemplarischen Verlauf der Heiz- und Messtemperatur mit einer nicht vollständig mit Wasser benetzen Heizplatte; und

Fig. 7    ein schematisches Diagramm mit einem exemplarischen Verlauf der Heiz- und Messtemperatur beim Erhitzen eines inhomogenen Lebensmittels.

In den teilweise nicht maßstabsgerechten, nur schematischen Figuren werden für gleiche, gleichartige oder ähnliche Bauteile und Komponenten dieselben Bezugszeichen verwendet, wobei entsprechende oder vergleichbare Eigenschaften und Vorteile erreicht werden, auch wenn von einer wiederholten Beschreibung abgesehen wird.

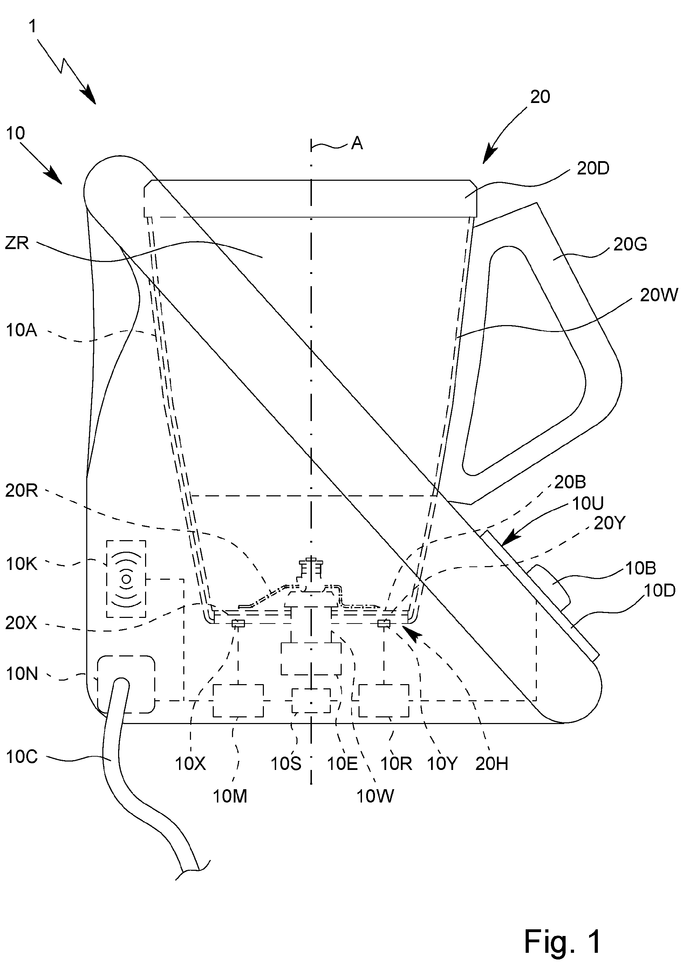

Fig. 1 zeigt schematisch eine vorschlagsgemäße Küchenmaschine 1 zur Zubereitung von Speisen bzw. Bearbeitung von Lebensmitteln. Bei der Küchenmaschine 1 handelt es sich vorzugsweise um eine elektrisch betriebene Multifunktions-Küchenmaschine, die zum Zerkleinern, Rühren bzw. Mischen und/oder Erhitzen bzw. Kochen von Lebensmitteln ausgebildet ist.

Die Küchenmaschine 1 weist vorzugsweise eine Basisstation 10 und/oder ein Gefäß 20 zur Aufnahme von Lebensmitteln auf.

Die Basisstation 10 und das Gefäß 20 sind vorzugsweise elektrisch und/oder mechanisch verbunden oder verbindbar, insbesondere um ein Erhitzen und/oder Mischen/Umrühren des Lebensmittels in dem Gefäß 20 zu ermöglichen. Es sind darüber hinaus auch Lösungen möglich, bei denen die Basisstation 10 und das Gefäß 20 zusätzlich fluidisch miteinander verbunden oder verbindbar sind, beispielsweise um in der Basisstation 10 erzeugten Wasserdampf in das Gefäß 20 zu leiten.

Fig. 1 zeigt die Küchenmaschine 1 im üblichen Gebrauchszustand bzw. in der Anschlussposition, in der das Gefäß 20 elektrisch und/oder mechanisch an die Basisstation 10 angeschlossen ist.

Die Basisstation 10 weist vorzugsweise eine Aufnahme 10A auf, um das Gefäß 20 zumindest teilweise und/oder bodenseitig aufzunehmen. Besonders bevorzugt ist das Gefäß 20 zumindest teilweise in die Basisstation 10 einsetzbar oder einhängbar, um das Gefäß 20 mechanisch und/oder elektrisch mit der Basisstation 10 zu verbinden.

Das Gefäß 20 weist eine Wandung 20W, einen Boden 20B und einen Zubereitungsraum ZR auf, wobei die Wandung 20W den Zubereitungsraum ZR radial bzw. seitlich und der Boden 20B den Zubereitungsraum ZR axial bzw. von unten begrenzt.

Das Gefäß 20 weist vorzugsweise einen Deckel 20D auf, um den Zubereitungsraum ZR axial bzw. von oben zu begrenzen bzw. insbesondere drucksicher zu verschließen.

Optional ist das Gefäß 20 mit einem Griff 20G ausgestattet, um die Handhabung des Gefäßes 20 zu erleichtern.

Bei der dargestellten Ausführungsform ist das Gefäß 20 zumindest im Wesentlichen rund bzw. zylinderförmig ausgebildet. Es sind jedoch grundsätzlich auch Ausführungsformen möglich, bei denen das Gefäß 20 eckig, insbesondere rechteckig, ausgebildet ist.

Das Gefäß 20 weist eine Mittelachse A auf, wobei die Mittelachse A mittig durch das Gefäß 20 bzw. den Zubereitungsraum ZR verläuft, wie in Fig. 1 angedeutet.

Vorzugsweise ist die Mittelachse A eine Längs- oder Symmetrieachse des vorzugsweise länglichen, zylindrischen und/oder zumindest im Wesentlichen rotationssymmetrischen Gefäßes 20.

Optional ist das Gefäß 20 mit einem Rührer 20R ausgestattet, insbesondere um Lebensmittel im Zubereitungsraum ZR zu zerkleinern und/oder zu mischen. Der Rührer 20R ist vorzugsweise am Boden 20B des Gefäßes 20 angeordnet bzw. drehbar gelagert. Der Rührer 20R weist vorzugsweise mehrere, insbesondere austauschbare, Rührblätter auf.

Vorzugsweise weisen die Rührblätter Schneiden auf oder sind als Schneiden ausgebildet, um Lebensmittel zu zerkleinern.

Vorzugsweise entspricht die Mittelachse A des Gefäßes 20 der Drehachse des Rührers 20R.

Vorzugsweise ist das Gefäß 20 mechanisch mit der Basisstation 10 verbunden oder verbindbar, um den Rührer 20R mittels der Basisstation 10 anzutreiben.

Zum Antrieb des Rührers 20R weist die Küchenmaschine 1, insbesondere die Basisstation 10, einen Elektromotor 10E auf, der über eine Welle 10W mit dem Rührer 20R verbunden oder verbindbar ist und/oder - in der Anschlussposition - von unten formschlüssig in den Boden 20B eingreift.

Wie eingangs bereits erläutert, ist die Küchenmaschine 1 dazu ausgebildet, Lebensmittel bzw. ein Medium im Gefäß 20 bzw. im Zubereitungsraum ZR zu erhitzen.

Zu diesem Zweck ist das Gefäß 20 bzw. der Zubereitungsraum ZR elektrisch beheizbar bzw. weist die Küchenmaschine 1 ein elektrisches Heizsystem 20H auf.

Das Heizsystem 20H ist zum (unmittelbaren) Erhitzen des Gefäßes 20, insbesondere des Bodens 20B und/oder des Zubereitungsraums ZR, ausgebildet. Besonders bevorzugt ist das Heizsystem 20H als Dickschichtheizung ausgebildet.

Bei der dargestellten Ausführungsform ist das Heizsystem 20H in das Gefäß 20, insbesondere den Boden 20B, integriert bzw. bildet das Heizsystem 20H oder ein Teil des Heizsystems 20H den Boden 20B des Gefäßes 20 oder einen Teil davon. Es sind jedoch auch konstruktive Lösungen möglich, bei denen die Basisstation 10 das Heizsystem 20H aufweist oder bildet.

Um eine Stromversorgung der Basisstation 10 und/oder des Gefäßes 20, insbesondere des Heizsystems 20H und/oder des Elektromotors 10E, zu ermöglichen, ist die Küchenmaschine 1, insbesondere die Basisstation 10, mit einem Netzteil 10N - vorzugsweise mit einer entsprechenden Ladeelektronik - und/oder einem Netzkabel 10C zum Anschluss an ein Stromnetz ausgestattet.

Vorzugsweise weist die Basisstation 10 einen oder mehrere elektrische Anschlüsse 10X bzw. 10Y für das Gefäß 20 auf, um das Gefäß 20 - in der Anschlussposition - elektrisch mit der Basisstation 10 bzw. dem Netzteil 10N zu verbinden bzw. mit elektrischer Energie zu versorgen.

Die elektrischen Anschlüsse 10X bzw. 10Y ist bzw. sind vorzugsweise in die Aufnahme 10A der Basisstation 10 integriert, insbesondere derart, dass durch Einsetzen des Gefäßes 20 in die Basisstation 10 automatisch eine elektrische Verbindung zwischen dem Gefäß 20 und der Basisstation 10 hergestellt wird.

Das Gefäß 20 weist vorzugsweise einen oder mehrere zu dem elektrischen Anschluss 10X bzw. 10Y korrespondierende elektrische Anschlüsse 20X bzw. 20Y auf, vorzugsweise wobei der elektrische Anschluss 20X bzw. 20Y auf einer Unterseite des Gefäßes 20 bzw. des Boden 20B angeordnet ist, wie in Fig. 1 angedeutet.

Die elektrischen Anschlüsse 10X bzw. 10Y und 20X bzw. 20Y sind vorzugsweise durch einen oder mehrere elektrische Kontakte oder - insbesondere für eine drahtlose Energieübertragung - durch eine oder mehrere Spulen gebildet.

Die Küchenmaschine 1, insbesondere die Basisstation 10, weist vorzugsweise eine Benutzerschnittstelle 10U, eine Datenverarbeitungseinrichtung 10R, eine Steuereinrichtung 10S, eine Kommunikationseinrichtung 10K und/oder eine Messeinrichtung 10M auf, vorzugsweise wobei die Benutzerstelle 10U, die Datenverarbeitungseinrichtung 10R, die Steuereinrichtung 10S, die Kommunikationseinrichtung 10K, die Messeinrichtung 10M, das Netzteil 10N, das Heizsystem 20H, der Elektromotor 10E und/oder die Anschlüsse 10X, 10Y elektrisch miteinander verbunden sind, wie in Fig. 1 durch Strichlinien angedeutet.

Die Benutzerschnittstelle 10U ist durch mindestens eine Anzeigeeinrichtung 10D, wie einen Bildschirm, und mindestens eine Eingabeeinrichtung 10B, insbesondere ein Bedienelement, wie ein Drehknopf, gebildet. Über die Benutzerschnittstelle 10U kann ein Nutzer der Küchenmaschine 1 mit der Küchenmaschine 1 interagieren bzw. ein oder mehrere Informationen, beispielsweise betreffend den Betrieb der Küchenmaschine 1, die zuzubereitenden Lebensmittel und/oder das zu verwendende Rezept, der Küchenmaschine 1 entnehmen und/oder zufügen.

Die Datenverarbeitungseinrichtung 10R ist vorzugsweise eine Einrichtung zur Auswertung, Speicherung und/oder Verarbeitung ein oder mehrerer Signale, Daten, Messwerte, Referenzwerte, Informationen o.dgl. Insbesondere weist die Datenverarbeitungseinrichtung 10R eine Recheneinheit, wie einen Prozessor, und/oder einen (Daten-)Speicher, beispielsweise in Form einer SSD, auf.

Die Steuereinrichtung 10S ist vorzugsweise dazu ausgebildet, den Elektromotor 10E bzw. den Rührer 20R und/oder das Heizsystem 20H zu steuern, insbesondere zu aktivieren bzw. zu deaktivieren und/oder die Leistung des Elektromotors 10E und/oder des Heizsystems 20H anzupassen.

Durch die Kommunikationseinrichtung 10K kann die Küchenmaschine 1 mit einem oder mehreren (externen) Geräten, insbesondere einem Mobilgerät, wie einem Mobiltelefon, und/oder Einrichtungen, insbesondere einer Zentraleinrichtung, wie einem Server, (datentechnisch) gekoppelt werden.

Insbesondere ermöglicht die Kommunikationseinrichtung 10K eine drahtgebundene oder drahtlose Datenverbindung zwischen der Küchenmaschine 1 und einem oder mehreren Geräten bzw. einer oder mehreren Einrichtungen, um ein Signal und/oder eine Information, insbesondere betreffend den Betrieb der Küchenmaschine 1, die zuzubereitenden Lebensmittel und/oder das zu verwendende Rezept, zu ermitteln bzw. zwischen der Küchenmaschine 1 und dem bzw. den Geräten und/oder der bzw. den Einrichtung(en) auszutauschen, wobei der Datenaustausch bzw. die Signalübertragung dabei direkt oder indirekt erfolgen kann.

Ein Signal im Sinne der vorliegenden Erfindung ist vorzugsweise ein Mittel zur Informationsübertragung, eine (modulierte) Welle, eine Bitsequenz, ein Paket im informationstechnischem Sinne oder dergleichen. Insbesondere sind einem Signal ein oder mehrere Informationen zugeordnet und/oder in dem Signal enthalten, die mittels des Signals übermittelbar sind.

Die Kommunikationseinrichtung 10K weist vorzugsweise einen Receiver zum Empfangen eines Signals, einen Transmitter zum Senden eines Signals und/oder eine Schnittstelle, insbesondere eine Funkschnittstelle, eine WPAN-Schnittstelle, eine Nahfeldkommunikationsschnittstelle, eine NFC-Schnittstelle, eine WLAN-Schnittstelle oder eine sonstige, besonders bevorzugte drahtlose Schnittstelle auf.

Mittels der Messeinrichtung 10M können ein oder mehrere Messgrößen, wie eine Temperatur, ein Gewicht, eine elektrische Spannung, eine elektrische Stromstärke, ein elektrischer Widerstand, eine Drehzahl, ein Druck, eine Luftfeuchtigkeit und/oder eine Neigung der Küchenmaschine 1, insbesondere der Basisstation 10 und/oder des Gefäßes 20, besonders bevorzugt des Elektromotors 10E und/oder des Heizsystems 20H, (direkt oder indirekt) bestimmt bzw. gemessen werden. Zu diesem Zweck weist die Messeinrichtung 10M ein oder mehrere Sensoren bzw. Messgeräte auf, wie einen Temperatursensor, eine Waage, ein Spannungsmessgerät, ein Strommessgerät, ein Drehzahlmessgerät, einen Drucksensor, einen Feuchtigkeitssensor und/oder einen Neigungssensor.

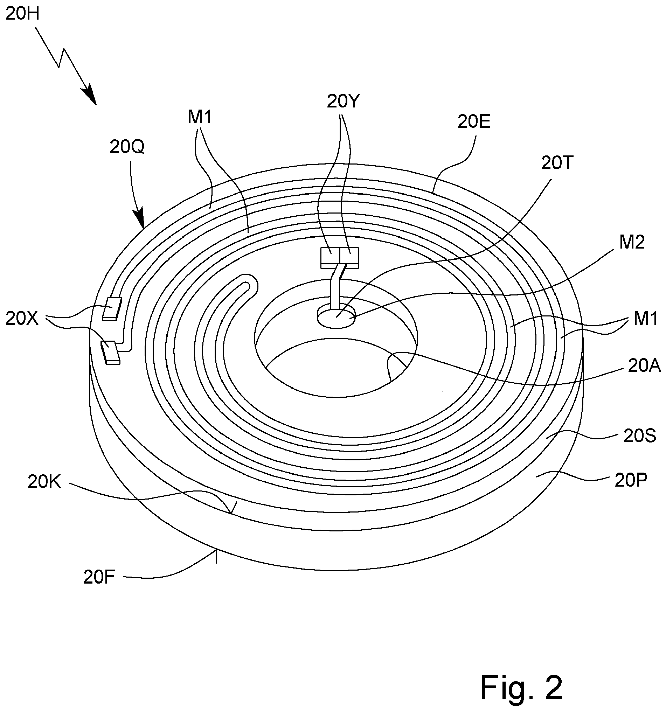

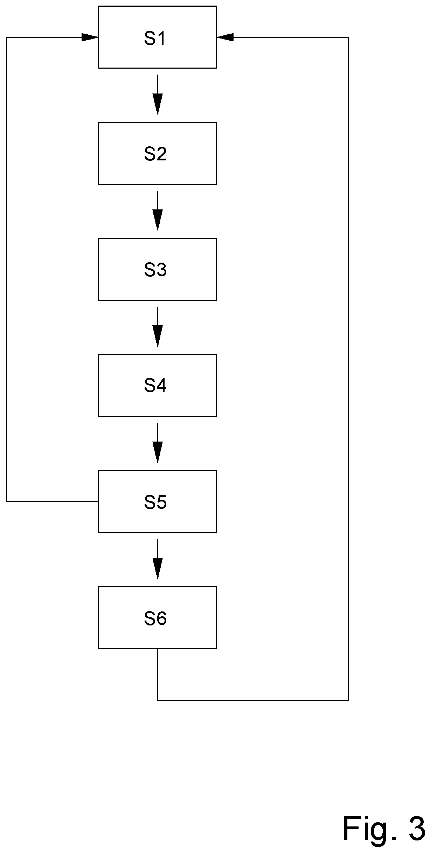

Im Folgenden wird anhand von Fig. 2 der konstruktive Aufbau des Heizsystems 20H näher erläutert. Anschließend wird anhand der Fig. 3 bis 7 das vorschlagsgemäße Verfahren erläutert.

Fig. 2 zeigt das Heizsystem 20H in einer perspektivischen Ansicht von unten bzw. von einer dem Zubereitungsraum ZR (nicht dargestellt) abgewandten Seite.

Das Heizsystem 20H weist vorzugsweise eine elektrische Heizeinrichtung 20Q und/oder eine Heizplatte 20P auf, vorzugsweise wobei die Heizeinrichtung 20Q zur Wärmeerzeugung bzw. zum (gleichmäßigen) Erhitzen der Heizplatte 20P und/oder die Heizplatte 20P zur (gleichmäßigen) Wärmeabgabe insbesondere an den Zubereitungsraum ZR bzw. ein darin befindliches Lebensmittel ausgebildet ist.

Das Heizsystem 20H ist vorzugsweise flach bzw. plattenartig/scheibenartig ausgebildet, insbesondere um das Heizsystem 20H in den Boden 20B des Gefäßes 20 integrieren zu können.

Das Heizsystem 20H, insbesondere die Heizeinrichtung 20Q und/oder die Heizplatte 20P, ist bzw. sind vorzugsweise ringförmig bzw. kreisscheibenförmig ausgebildet und/oder weist bzw. weisen eine insbesondere mittige Öffnung 20A auf, um den Elektromotor 10E, die Welle 10W und/oder den Rührer 20R zumindest teilweise aufzunehmen. Mit anderen Worten erstreckt sich das Heizsystem 20H, insbesondere die Heizeinrichtung 20Q und/oder die Heizplatte 20P, ringförmig um den Elektromotor 10E, die Welle 10W und/oder den Rührer 20R.

Die Heizplatte 20P ist vorzugsweise als Wärmeübertrager ausgebildet bzw. dazu ausgebildet, die mittels der Heizeinrichtung 20Q erzeugte Wärme insbesondere an den Zubereitungsraum ZR abzuführen und/oder an ein Lebensmittel in dem Gefäß 20 bzw. dem Zubereitungsraum ZR zu übertragen. Zu diesem Zweck ist die Heizplatte 20P vorzugsweise ganz oder teilweise aus Metall, insbesondere Kupfer, Aluminium und/oder Edelstahl, hergestellt.

Vorzugsweise begrenzt die Heizplatte 20P den Zubereitungsraum ZR nach unten und/oder bildet die Heizplatte 20P den Boden 20B des Gefäßes 20 oder einen Teil davon. Insbesondere steht die Heizplatte 20P bei der Zubereitung des Lebensmittels (unmittelbar) mit dem Lebensmittel in Kontakt.

Die Heizplatte 20P ist vorzugsweise zwischen der Heizeinrichtung 20Q und dem Zubereitungsraum ZR angeordnet und/oder trennt die Heizeinrichtung 20Q von dem Zubereitungsraum ZR.

Die Heizplatte 20P weist vorzugsweise auf einer Oberseite bzw. einer dem Zubereitungsraum ZR zugewandten Seite eine Heizfläche 20F und auf einer Unterseite bzw. einer dem Zubereitungsraum ZR abgewandten Seite eine Kontaktfläche 20K auf, vorzugsweise wobei die Heizplatte 20P mit der Kontaktfläche 20K vollflächig auf der Heizeinrichtung 20Q anliegt.

Die Heizplatte 20P kann ein- oder mehrschichtig ausgebildet sein.

Vorzugsweise ist zumindest die dem Zubereitungsraum ZR zugewandte Schicht/Seite der Heizplatte 20P lebensmittelecht ausgebildet und/oder aus Edelstahl hergestellt.

Das Heizsystem 20H, insbesondere die Heizeinrichtung 20Q, weist vorzugsweise mindestens ein Heizelement 20E und/oder eine Trägerschicht 20S auf, vorzugsweise wobei das Heizelement 20E auf oder in der Trägerschicht 20S angeordnet und/oder durch die Trägerschicht 20S elektrisch von der Heizplatte 20P isoliert ist. Insbesondere ist die Trägerschicht 20S aus einem elektrisch isolierenden Material, beispielsweise faserverstärktem Kunststoff, hergestellt, um das Heizelement 20E elektrisch zu isolieren.

Das Heizelement 20E ist vorzugsweise als elektrischer (länglicher) Leiter, besonders bevorzugt als Thermistor, insbesondere als Kaltleiter bzw. PTC-Widerstand, ausgebildet. Es sind jedoch auch Lösungen möglich, bei denen das Heizelement 20E als Heißleiter bzw. NTC-Widerstand ausgebildet ist.

Vorzugsweise wandelt das Heizelement 20E elektrische Energie in Wärmeenergie um bzw. erhitzt sich das Heizelement 20E, insbesondere auf eine Heiztemperatur HT, wenn es von einem elektrischen Strom durchflossen wird.

Um das Heizelement 20E mit elektrischer Energie zu versorgen, weist das Heizsystem 20H, insbesondere die Heizeinrichtung 20Q, den elektrischen Anschluss 20X auf, vorzugsweise wobei der elektrische Anschluss 20X durch zwei elektrische Kontakte gebildet ist. Es sind jedoch auch Ausführungsformen möglich, bei denen das Heizsystem 20H, insbesondere die Heizeinrichtung 20Q, durch Induktion mit elektrischer Energie versorgt wird.

Vorzugsweise ist das Heizsystem 20H bzw. die Heizeinrichtung 20Q, insbesondere das Heizelement 20E, über den elektrischen Anschluss 20X des Heizsystems 20H und den elektrischen Anschluss 10X der Basisstation 10 elektrisch mit der Messeinrichtung 10M, der Steuereinrichtung 10S, der Datenverarbeitungseinrichtung 10R, der Benutzerschnittstelle 10U, der Kommunikationseinrichtung 10K und/oder dem Netzteil 10N verbunden oder verbindbar.

Bei der dargestellten Ausführungsform ist das Heizelement 20E spiralförmig ausgebildet bzw. um die Öffnung 20A gewickelt. Hier sind jedoch auch andere Anordnungen bzw. Wickelungen möglich, beispielsweise bei denen das Heizelement 20E mäanderförmig ausgebildet ist.

Vorzugsweise erstreckt sich das Heizelement 20E in einer Ebene, insbesondere wobei die durch das Heizelement 20E gebildete Ebene zumindest im Wesentlichen parallel zu der Heizplatte 20P, insbesondere der Heizfläche 20F und/oder der Kontaktfläche 20K, und/oder orthogonal zu der Mittelachse A des Gefäßes 20 verläuft.

Vorzugsweise weist das Heizelement 20E eine erste bzw. flächige, bei der dargestellten Ausführungsform spiralförmige, Messstelle M1 zur (direkten oder indirekten) Bestimmung/Messung der Heiztemperatur HT auf bzw. bildet eine solche. Insbesondere entspricht die Fläche des Heizelements 20E der Fläche der ersten/flächigen Messstelle M1.

Besonders bevorzugt beträgt die Fläche des Heizelements 20E bzw. der ersten/flächigen Messstelle M1 mindestens 10 %, 20 % oder 30 % der Fläche der Heizplatte 20P, insbesondere der Heizfläche 20F und/oder der Kontaktfläche 20K.

Wie eingangs bereits erläutert, variiert der elektrische Widerstand R des Heizelements 20E, im Folgenden kurz Widerstand R genannt, mit der Heiztemperatur HT.

Die Heiztemperatur HT ist vorzugsweise die insbesondere mittlere/durchschnittliche bzw. über die gesamte Länge/Fläche des Heizelements 20E gemittelte bzw. flächige Temperatur des Heizelements 20E und/oder die an der ersten/flächigen Messstelle M1 vorliegende Temperatur.

Vorzugsweise wird der Widerstand R des Heizelements 20E mit zunehmender Heiztemperatur HT größer, besonders bevorzugt näherungsweise gemäß der folgenden linearen Gleichung:

$$R = R1 \left[ 1 + TCR \left( HT - HT1 \right) \right],$$

mit HT1 in [°C] als erster Heiztemperaturwert bzw. Referenzheiztemperaturwert zu einem Zeitpunkt t1, mit R1 in [Ω] als erster Widerstandswert bzw. Referenzwiderstandswert bei dem ersten Heiztemperaturwert HT1 bzw. zum Zeitpunkt t1 und mit TCR in [1/°C] als (positiver) Temperaturkoeffizient bzw. Widerstandssteigungswert des Heizelements 20E. Hier sind jedoch auch andere, insbesondere nichtlineare Gleichungen verwendbar, um den Zusammenhang zwischen dem Widerstand R und der Heiztemperatur HT mathematisch abzubilden.

Aufgrund dieser Abhängigkeit kann das Heizelement 20E als insbesondere flächig messendes Widerstandsthermometer verwendet bzw. mittels des Widerstands R die Heiztemperatur HT bestimmt werden, vorzugsweise wobei der Widerstand R mittels des Messeinrichtung 10M bzw. durch eine Strom- und Spannungsmessung ermittelt wird.

Vorzugsweise werden der erste Heiztemperaturwert HT1, der erste Widerstandswert R1 und/oder der Temperaturkoeffizient TCR durch eine Kalibrierung der Küchenmaschine 1, insbesondere des Heizsystems 20H, ermittelt und/oder in der Datenverarbeitungseinrichtung 10R der Basisstation 10 und/oder in einer Zentraleinrichtung, wie einem Server, elektronisch gespeichert.

Die Küchenmaschine 1, insbesondere das Heizsystem 20H, weist vorzugsweise ein Temperaturelement 20T zum Ermitteln einer Messtemperatur MT auf.

Das Temperaturelement 20T ist vorzugsweise als Temperatursensor bzw. Thermometer, besonders bevorzugt als (lokal messendes) Widerstandsthermometer, insbesondere NTC-Sensor, ausgebildet.

Das Temperaturelement 20T ist vorzugsweise (unmittelbar) an der Heizplatte 20P angeordnet bzw. befestigt. Bei der dargestellten Ausführungsform ist das Temperaturelement 20T in der Öffnung 20A angeordnet. Es sind jedoch auch andere Lösungen möglich, beispielsweise bei denen das Temperaturelement 20T auf bzw. an der Heizfläche 20F, der Wandung 20W oder dem Rührer 20R angeordnet bzw. befestigt ist.

Das Temperaturelement 20T ist vorzugsweise mit dem zweiten elektrischen Anschluss 20Y elektrisch verbunden, vorzugsweise wobei der zweite elektrische Anschluss 20Y auf einer dem Zubereitungsraum ZR abgewandten Seite bzw. Unterseite des Heizsystems 20H bzw. der Heizeinrichtung 20Q angeordnet ist.

Vorzugsweise ist das Temperaturelement 20T über den elektrischen Anschluss 20Y des Gefäßes 20 und den elektrischen Anschluss 10Y der Basisstation 10 elektrisch mit der Messeinrichtung 10M, der Steuereinrichtung 10S, der Datenverarbeitungseinrichtung 10R, der Benutzerschnittstelle 10U, der Kommunikationseinrichtung 10K und/oder dem Netzteil 10N verbunden oder verbindbar.

Das Temperaturelement 20T ist vorzugsweise ausschließlich zur Messung der Messtemperatur MT ausgebildet. Das Temperaturelement 20T kann jedoch auch als (weiteres) Heizelement ausgebildet sein bzw. verwendet werden. Insbesondere kann das Temperaturelement 20T zusätzlich oder alternativ, insbesondere bedarfsweise, zur Erzeugung von Wärme eingesetzt werden.

Das Temperaturelement 20T weist vorzugsweise eine zweite bzw. lokale Messstelle M2 zur (direkten oder indirekten) Bestimmung/Messung der Messtemperatur MT auf oder bildet diese.

Die Messtemperatur MT ist vorzugsweise die von dem Temperaturelement 20T und/oder an der Messstelle M2 bestimmte Temperatur. Insbesondere ist die Messtemperatur MT die (mittlere) Temperatur der Heizplatte 20P an der Messstelle M2.

Das Heizelement 20E bzw. die erste/flächige Messstelle M1 ist vorzugsweise größer bzw. flächiger als das Temperaturelement 20T bzw. die zweite Messstelle M2, vorzugsweise um mindestens das Fünffache oder Zehnfache.

Vorzugsweise ist das Temperaturelement 20T bzw. die zweite Messstelle M2 von dem Heizelement 20E bzw. der ersten Messstelle M1 beabstandet, besonders bevorzugt radial und/oder axial und/oder um mindestens 0,5 cm oder 1 cm.

Besonders bevorzugt ist das Temperaturelement 20T bzw. die zweite Messstelle M2 näher an dem Zubereitungsraum ZR als das Heizelement 20E bzw. die erste Messstelle M1.

Insbesondere aufgrund des Abstands des Temperaturelements 20T bzw. der zweiten Messstelle M2 von dem Heizelement 20E bzw. der ersten Messstelle M1 ist die Messtemperatur MT kleiner als die Heiztemperatur HT, insbesondere um mindestens 5 °C oder 10 °C.

Im Folgenden wird anhand der Fig. 3 bis 7 das vorschlagsgemäße Verfahren zum Betreiben bzw. Regeln der Küchenmaschine 1 bzw. des elektrischen Heizsystems 20H beschrieben.

Das vorschlagsgemäße Verfahren wird vorzugsweise durch die bzw. in der Küchenmaschine 1, insbesondere mittels des Heizsystems 20H, der Steuereinrichtung 10S, der Messeinrichtung 10M, der Datenverarbeitungseinrichtung 10R und/oder des Elektromotors 10E, durchgeführt.

Wie eingangs bereits erläutert, sollen mit dem vorschlagsgemäßen Verfahren kritische Heizzustände bzw. lokale Temperaturveränderungen des Heizsystems 20H, insbesondere der Heizplatte 20P und/oder des Heizelements 20E, identifiziert/detektiert werden.

Zu diesem Zweck wird die Messtemperatur MT und die Heiztemperatur HT bzw. der Widerstand R bestimmt/ermittelt und - insbesondere durch einen Signalvergleich bzw. messtechnisch - miteinander verglichen.

Das Verfahren ist vorzugsweise mehrstufig bzw. mehrschrittig ausgebildet. Insbesondere weist das Verfahren mehrere Verfahrensschritte auf.

Fig. 3 zeigt ein schematisches Ablaufdiagramm des vorschlagsgemäßen Verfahrens mit mehreren, hier sechs, Verfahrensschritten.

Die einzelnen Verfahrensschritte S1-S6 können grundsätzlich unabhängig voneinander, aber auch in beliebiger Reihenfolge bzw. Kombination realisiert werden.

In dem optionalen ersten Verfahrensschritt S1 wird vorzugsweise eine Kalibrierung der Küchenmaschine 1, insbesondere des Heizsystems 20H bzw. des Heizelements 20E, durchgeführt, insbesondere um anschließend bzw. in den folgenden Verfahrensschritten S2-S6 - ausschließlich bzw. ohne den Einsatz des Temperaturelements 20T - anhand des Widerstands R des Heizelements 20E die Heiztemperatur HT zu bestimmen bzw. das Heizelement 20E als Widerstandsthermometer verwenden zu können.

Der erste Verfahrensschritt S1 bzw. die Kalibrierung wird vorzugsweise selbsttätig bzw. automatisch durchgeführt, insbesondere nach dem Start der Küchenmaschine 1 bzw. des Heizsystems 20H. Auf diese Weise wird eine stets präzise bzw. zuverlässige Identifikation von kritischen Heizzuständen HA ermöglicht oder unterstützt.

Die Kalibrierung erfolgt vorzugsweise durch einen vordefinierten Heiz- bzw. Kalibriervorgang, beispielsweise

bei dem das Heizsystem 20H für einen bestimmten Zeitraum eine vordefinierte Wärmeleistung abgibt.

Bei bzw. während der Kalibrierung wird vorzugsweise das Heizsystem 20H aktiviert und/oder das Heizelement 20E mit Strom beaufschlagt, insbesondere derart, dass sich das Heizelement 20E erhitzt bzw. die Heiztemperatur HT steigt.

Bei bzw. zur Kalibrierung und/oder während des Kalibriervorgangs werden ein erster elektrischer Widerstandswert R1 des Heizelements 20E und ein zu dem ersten Widerstandswert R1 korrespondierender Heiztemperaturwert HT1 des Heizelements 20E ermittelt und/oder einander zugeordnet, insbesondere als Referenzwerte. Besonders bevorzugt wird der erste Widerstandswert R1 als Widerstandsreferenzwert dem ersten Heiztemperaturwert HT1 als Heiztemperaturreferenzwert zugeordnet.

Der erste Widerstandswert R1 wird vorzugsweise durch eine Spannungs- und Strommessung an dem Heizsystem 20H, insbesondere dem Heizelement 20E, besonders bevorzugt mittels der Messeinrichtung 10M, ganz besonders bevorzugt zu einem ersten Zeitpunkt t1, und/oder gemäß der folgenden Gleichung ermittelt:

$$R1 = U1 \, / \, I1,$$

mit U1 als Effektivwert der Spannung zum Zeitpunkt t1 in [V] und I1 als Effektivwert der Stromstärke zum Zeitpunkt t1 in [A].

Es ist bevorzugt, dass bei bzw. zur Kalibrierung und/oder während des Kalibriervorgangs mehrere (unterschiedliche) elektrische Widerstandswerte R1 bzw. R2 des Heizelements 20E und dazu korrespondierende Heiztemperaturwerte HT1 bzw. HT2 des Heizelements 20E bestimmt bzw. einander zugeordnet werden.

Besonders bevorzugt werden zeitversetzt bzw. zum zweiten/späteren Zeitpunkt t2 ein zweiter elektrischer Widerstandswert R2 des Heizelements 20E und ein zweiter Heiztemperaturwert HT2 des Heizelements 20E ermittelt bzw. bestimmt.

Der zweite Widerstandswert R2 wird vorzugsweise ebenfalls durch eine Spannungs- und Strommessung an dem Heizsystem 20H, insbesondere dem Heizelement 20E, besonders bevorzugt mittels der Messeinrichtung 10M, ganz besonders bevorzugt zu einem zweiten Zeitpunkt t2 und/oder gemäß der folgenden Gleichung ermittelt:

$$R2 = U2 \, / \, I2,$$

mit U2 als Effektivwert der Spannung zum Zeitpunkt t2 in [V] und I2 als Effektivwert der Stromstärke zum Zeitpunkt t2 in [A].

Anhand der Referenzwerte bzw. der Wertpaare, insbesondere des ersten Widerstandswerts R1, des ersten Heiztemperaturwerts HT1, des zweiten Widerstandswerts R2 und des zweiten Heiztemperaturwerts HT2, wird vorzugsweise der Temperaturkoeffizient TCR des Heizelements 20E bestimmt bzw. abgeschätzt, insbesondere gemäß der folgenden Gleichung:

$$TCR = [ \, (R2/R1) -1 \, ] \, / \, (HT2 - HT1).$$

Wie bereits erläutert, wird bzw. werden die Heiztemperaturwerte HT1 bzw. HT2 zur Kalibrierung vorzugsweise mittels des Temperaturelements 20T bestimmt.

Da das Temperaturelement 20T nicht unmittelbar an dem Heizelement 20E angeordnet ist, entspricht die mittels des Temperaturelements 20T ermittelte Messtemperatur MT nicht der Heiztemperatur HT des Heizelements 20E.

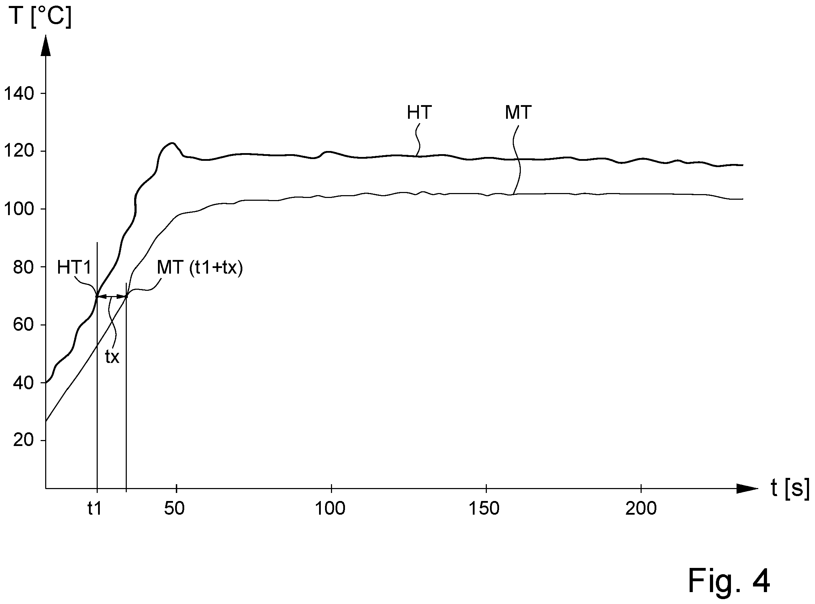

Wie beispielsweise der Verlauf der Heiztemperatur HT und der Messtemperatur MT in dem Diagramm gemäß Fig. 4 veranschaulicht, ist die Heiztemperatur HT beim üblichen Heizvorgang größer als die Messtemperatur MT bzw. eilt die Heiztemperatur HT während der Aufheizphase, die in Fig. 4 etwa die ersten 50 Sekunden dauert, der Messtemperatur MT voraus.

Vor diesem Hintergrund wird die mittels des Temperaturelements 20T ermittelte Messtemperatur MT vorzugsweise umgerechnet bzw. um einen insbesondere empirisch ermittelten Wert korrigiert, um die Heiztemperatur HT zu bestimmen.

Vorzugsweise entspricht - zumindest während der Aufheizphase - die Messtemperatur MT einer zeitlich zurückliegenden Heiztemperatur HT. Insbesondere entspricht der Heiztemperaturwert HT1 = HT(t1) zum Zeitpunkt t1 dem Messtemperaturwert MT(t1 + tx) zu einem späteren Zeitpunkt t1 + tx, wie in Fig. 4 dargestellt. Es kann also zur Bestimmung der Heiztemperatur HT - zumindest während der Aufheizphase - die Messtemperatur MT um eine charakteristische Zeitkonstante tx korrigiert werden, insbesondere gemäß der folgenden Gleichung:

$$HT1 = MT(t1 + tx),$$

mit tx als charakteristische, vorzugsweise empirisch ermittelte Zeitkonstante in [s].

Alternativ ist es möglich, die Messtemperatur MT um eine vordefinierte, vorzugsweise empirisch ermittelte Temperaturkonstante Tx zu korrigieren, insbesondere gemäß der folgenden Gleichung:

$$HT = MT + Tx,$$

mit Tx als charakteristische, vorzugsweise empirisch ermittelte Temperaturkonstante in [°C].

Mit anderen Worten wird bei der Kalibrierung also vorzugsweise dem Widerstandswert R1 bzw. R2 ein zeitlich versetzter/korrigierter Messtemperaturwert MT(t1+tx) bzw. MT(t2+tx) zugeordnet.

Die zur Kalibrierung notwendigen bzw. gerätespezifischen Werte, insbesondere die charakteristische bzw. gerätespezifische Zeitkonstante tx und/oder die charakteristische bzw. gerätespezifische Temperaturkonstante Tx, und/oder die durch die Kalibrierung bestimmten Werte, insbesondere der bzw. die Widerstandswerte R1 bzw. R2, der bzw. die Messtemperaturwerte MT(t1+tx) bzw. MT(t2+tx), der bzw. die Heiztemperaturwerte HT1 bzw. HT2 und/oder der Temperaturkoeffizient TCR, werden bzw. sind vorzugsweise in der Küchenmaschine 1, insbesondere der Datenverarbeitungseinrichtung 10R, und/oder einem externen Gerät elektronisch bzw. datentechnisch gespeichert bzw. hinterlegt.

Die Kalibrierung wird vorzugsweise vor, insbesondere nicht während eines Zubereitungsvorgangs bzw. der Zubereitung von Speisen, und/oder unter stets gleichbleibenden Bedingungen durchgeführt, insbesondere damit unterschiedliche Lebensmittel bzw. Zubereitungsvorgänge die Kalibrierung nicht beeinträchtigen.

Es ist jedoch grundsätzlich auch möglich, die Kalibrierung während eines Zubereitungsvorgangs bzw. bei der Zubereitung von Lebensmitteln, beispielsweise mittels einer definierten Heizunterbrechung oder einem vordefinierten Kalibrierrezept, durchzuführen. Insbesondere kann im ersten Verfahrensschritt S1 bzw. zur Kalibrierung eine definierte Wassermenge, beispielsweise 100 ml, mit einer definierten Leistung bzw. auf eine definierte Temperatur erhitzt werden.

Wie bereits erläutert, ermöglicht das vorschlagsgemäße Verfahren eine gerätespezifische Kalibrierung des Heizsystems 20H bzw. der Küchenmaschine 1 vor Ort bzw. durch einen Nutzer und/oder unabhängig von zusätzlichen (externen) Messgeräten. Es ist jedoch grundsätzlich auch möglich, dass die Kalibrierung bereits im Auslieferungszustand der Küchenmaschine 1 bzw. des Heizsystems 20H durchgeführt wurde und/oder die vorgenannten Werte bereits im Auslieferungszustand der Küchenmaschine 1 in der Küchenmaschine 1, insbesondere der Datenverarbeitungseinrichtung 10R, und/oder auf einem externen Gerät gespeichert sind.

In einem zweiten, auch unabhängig durchführbaren Verfahrensschritt S2 wird der Widerstand R des Heizelements 20E bzw. die Heiztemperatur HT des Heizelements 20E ermittelt bzw. bestimmt, insbesondere mittels der Messeinrichtung 10M.

Zusätzlich wird im zweiten Verfahrensschritt S2 die Messtemperatur MT ermittelt, insbesondere mittels des Temperaturelements 20T.

Die Messung/Bestimmung/Ermittlung des Widerstands R, der Heiztemperatur HT und/oder der Messtemperatur MT erfolgt vorzugsweise kontinuierlich oder in Intervallen während des Heizbetriebs der Küchenmaschine 1 bzw. des Heizsystems 20H, beispielsweise einmal oder zweimal pro Sekunde bzw. mit einer Abtastrate von 1 Hz oder 2 Hz.

Die gemessenen/ermittelten Werte, insbesondere der Widerstand R, die Heiztemperatur HT und/oder die Messtemperatur MT, werden optional gemittelt, insbesondere um den Einfluss von Ausreißern zu reduzieren.

Die auf diese Weise ermittelten/bestimmten Werte werden vorzugsweise automatisch in der Küchenmaschine 1, insbesondere der Datenverarbeitungseinrichtung 10R, und/oder in einem externen Gerät, wie einem Server, gespeichert und/oder ausgewertet.

Fig. 4 zeigt in einem schematischen Diagramm den normalen/üblichen Verlauf der Heiztemperatur HT und der Messtemperatur MT über die Zeit beim Erhitzen von Wasser, also ohne kritische Heizzustände HA. In dem Diagramm ist zu erkennen, dass - zumindest im üblichen bzw. normalen Betrieb - die Heiztemperatur HT und die Messtemperatur MT zumindest im Wesentlichen parallel zueinander bzw. mit gleicher Steigung verlaufen, wobei die Heiztemperatur HT größer als die Messtemperatur MT ist, im vorliegenden Diagramm um etwa 15°C bis 20°C.

Während der Aufheizphase, bei dem in Fig. 4 dargestellten Verlauf von etwa 50 Sekunden, steigen die Heiztemperatur HT und die Messtemperatur MT zumindest im Wesentlichen gleichmäßig bzw. linear an.

Wenn das Wasser zu kochen beginnt, ist die maximale Temperatur bzw. die Siedetemperatur des Wassers erreicht. Anschließend ist ein stationärer Zustand bzw. Kochzustand erreicht, bei dem die Heiztemperatur HT, vorliegend in Höhe von etwa 120°C, und die Messtemperatur MT, vorliegend in Höhe von etwa 100°C, zumindest im Wesentlichen konstant bleiben.

Vorzugsweise wird in einem weiteren bzw. dritten Verfahrensschritt S3 überprüft, ob ein oder mehrere vordefinierte Kriterien K1-K3 erfüllt sind, insbesondere um einen kritischen Heizzustand HA zu identifizieren.

Insbesondere wird in einem weiteren bzw. dritten Verfahrensschritt S3 die Heiztemperatur HT und die Messtemperatur MT (unmittelbar oder mittelbar) miteinander verglichen, vorzugsweise durch einen (gefilterten) Signalvergleich bzw. messtechnisch, besonders bevorzugt anhand eines oder mehrerer vordefinierter Kriterien K1-K3.

Wie eingangs bereits erläutert, kann ein kritischer Heizzustand HA dann vorliegen, wenn eine lokale Temperaturveränderung, insbesondere eine Temperaturerhöhung und/oder Temperaturabsenkung, des Heizelements 20E im Vergleich zu der sonstigen (durchschnittlichen) Temperatur bzw. Temperaturverteilung des Heizelements 20E vorliegt.

Beispielsweise liegt ein kritischer Heizzustand HA bzw. eine lokale Temperaturveränderung vor, wenn die Heiztemperatur HT des Heizelements 20E an einer Stelle um mehr als 5°C oder 10°C im Vergleich zu der unmittelbaren Umgebung dieser Stelle abweicht, insbesondere für einen Zeitraum von mehr als einer Sekunde oder zwei Sekunden.

Besonders bevorzugt liegt ein kritischer Heizzustand HA vor, wenn ein Kriterium K1-K3 oder mehrere Kriterien K1-K3, insbesondere über einen vordefinierten Zeitraum, beispielsweise von mehr als einer Sekunde oder zwei Sekunden, erfüllt ist bzw. sind.

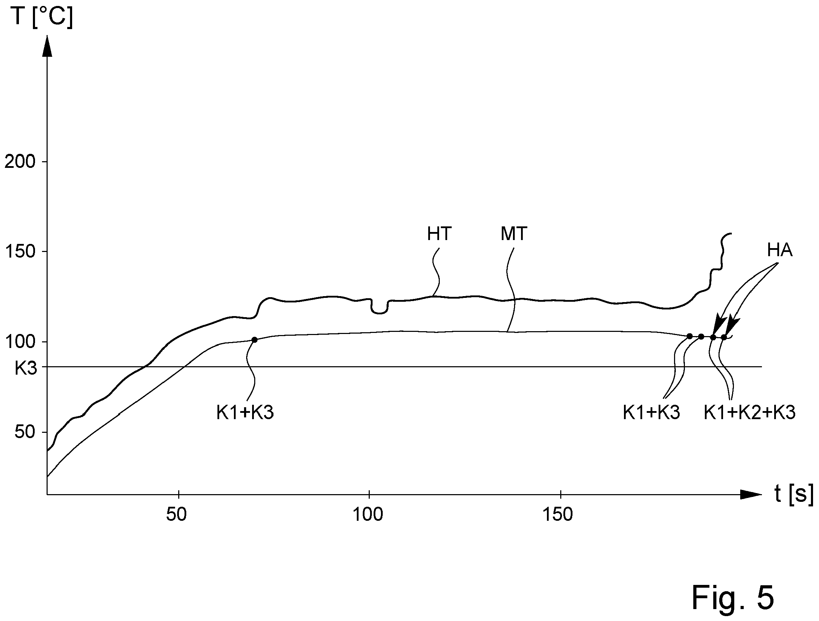

Fig. 5 bis Fig. 7 zeigen jeweils ein schematisches Diagramm mit unterschiedlichen Verläufen der Heiztemperatur HT und der Messtemperatur MT, wobei zu verschiedenen Zeitpunkten ein, mehrere oder alle Kriterien K1-K3 erfüllt sind und kritische Heizzustände HA vorliegen.

Das erste Kriterium K1 (Steigungskriterium) ist vorzugsweise dann erfüllt, wenn die Steigung bzw. der Gradient der Heiztemperatur HT um einen vordefinierten Grenzwert größer als die Steigung bzw. der Gradient der Messtemperatur MT ist. Mit anderen Worten wird bei dem ersten Kriterium K1 der Gradient der Heiztemperatur HT mit dem Gradienten der Messtemperatur MT verglichen bzw. die Differenz der Gradienten der Heiztemperatur HT und der Messtemperatur MT gebildet und mit einem vordefinierten Grenzwert, beispielsweise in Höhe von 2 °C/s oder 3 °C/s, verglichen.

Die Steigungsermittlung erfolgt vorzugsweise über einen vordefinierten Zeitraum bzw. Abtastzeitraum, beispielsweise von 2 Sekunden oder 3 Sekunden.

Das zweite Kriterium K2 (Differenzkriterium) liegt vorzugsweise dann vor, wenn die Heiztemperatur HT um einen vordefinierten Grenzwert größer als die Messtemperatur MT ist. Mit anderen Worten wird bei dem zweiten Kriterium K2 die Differenz der Heiztemperatur HT und der Messtemperatur MT gebildet und mit einem vordefinierten Grenzwert verglichen. Steigt die Differenz der Heiztemperatur HT und der Messtemperatur MT über den vordefinierten Grenzwert, beispielsweise 20°C oder 40°C, ist das zweite Kriterium K2 erfüllt.

Das dritte Kriterium K3 (absolutes Temperaturkriterium) liegt dann vor, wenn die Heiztemperatur HT oder die Messtemperatur MT (jeweils) einen vordefinierten Grenzwert, beispielsweise 80 °C für die Messtemperatur MT und/oder 100 °C für die Heiztemperatur HT, übersteigt. Mit anderen Worten werden/wird bei dem dritten Kriterium K3 die Heiztemperatur HT und/oder die Messtemperatur MT (jeweils) mit einem vordefinierten Grenzwert verglichen, vorzugsweise wobei der Grenzwert für die Heiztemperatur HT größer als der Grenzwert für die Messtemperatur MT ist.

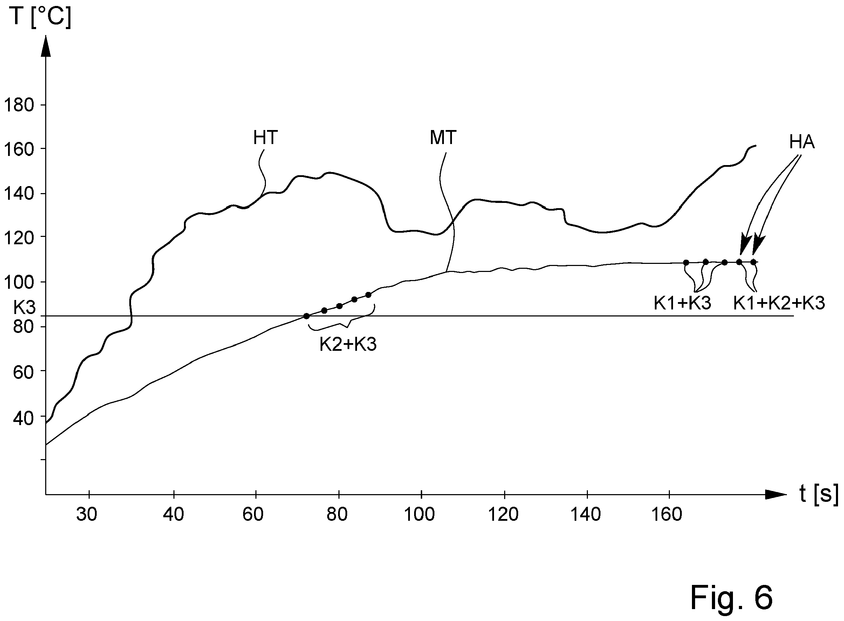

Fig. 5 und Fig. 6 zeigt jeweils einen exemplarischen Verlauf der Heiztemperatur HT und der Messtemperatur MT in einer Küchenmaschine 1, bei der die Heizplatte 20P - beispielsweise durch vollständig verdampfendes Wasser - lokal trockene Stellen aufweist bzw. - beispielsweise durch eine Schiefstellung der Küchenmaschine 1 nicht vollständig mit Wasser benetzt ist. An den trocknen Stellen wird die Wärme schlechter abgeführt als an den mit Wasser benetzten Stellen. Folglich steigt die Heiztemperatur HT des Heizelements 20E, in Fig. 5 und Fig. 6 am Ende der Kurve, stärker als die Messtemperatur MT, so dass das erste Kriterium K1 erfüllt ist.

Bei den dargestellten Beispielen liegt ein kritischer Heizzustand HA dann vor, wenn alle drei Kriterien K1-K3 erfüllt sind.

Da am Ende der Kurve gemäß Fig. 5 und Fig. 6 die Steigung der Heiztemperatur HT über einen längeren Zeitraum größer als die Steigung der Messtemperatur MT ist (erstes Kriterium K1), wird die Differenz zwischen der Heiztemperatur HT und der Messtemperatur MT immer größer, sodass ab einem bestimmten Zeitpunkt zusätzlich das zweite Kriterium K2 erfüllt ist. Darüber hinaus liegen sowohl die Heiztemperatur HT und die Messtemperatur MT über dem vordefinierten Grenzwert gemäß des dritten Kriterium K3, in Fig. 5 und Fig. 6 von etwa 80 °C. Folglich kann bzw. können am Ende des Verlaufs ein bzw. mehrere kritische Heizzustände HA identifiziert werden.

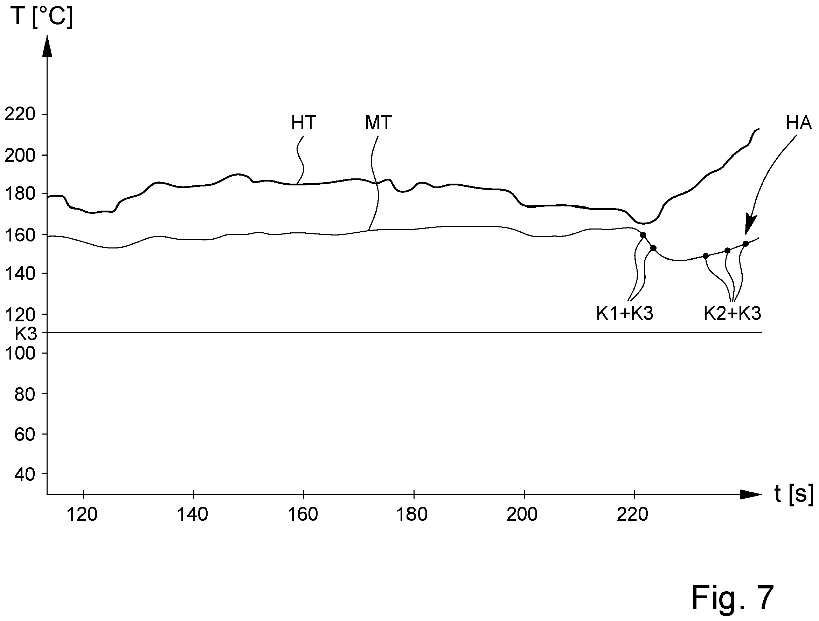

Fig. 7 zeigt einen exemplarischen Verlauf der Heiztemperatur HT und der Messtemperatur MT, bei dem eine lokale Temperaturabsenkung vorliegt, die beispielsweise bei der Zubereitung von inhomogenen Lebensmitteln bzw. einem Rezept mit vereinzeltem Stückgut, beispielsweise Fleischstücken, durch lokale Freisetzung von Wasser auftreten kann. Bei der Darstellung wird das Temperaturelement 20T dadurch lokal gekühlt und somit die Messtemperatur MT abgesenkt.

Da die Messtemperatur MT anschließend langsamer ansteigt als die Heiztemperatur HT, wird nach einer gewissen Zeit das zweite Kriterium K2 erfüllt.

Wie das Beispiel zeigt, kann ein kritischer Heizzustand HA dann vorliegen bzw. als solcher identifiziert werden, wenn ein Kriterium, vorliegend das dritte Kriterium K3 zusammen mit dem ersten Kriterium K1 und/oder dem zweiten Kriterium K2, über eine gewisse Zeitspanne, beispielsweise von etwa 10 Sekunden, auftritt. In dem Beispiel gemäß Fig. 7 sind lediglich am Ende des Verlaufs das zweite Kriterium K2 und das dritte Kriterium K3 über einen Zeitraum von etwa 10 Sekunden erfüllt, was hier einen kritischen Heizzustand HA darstellt.

Vorzugsweise werden in Abhängigkeit vom ausgewählten Rezept bzw. den zuzubereitenden Lebensmitteln unterschiedliche Grenzwerte bzw. Kriterien K1-K3 zur Identifizierung eines kritischen Heizzustands HA angewandt.

Insbesondere werden die Kriterien K1-K3 und/oder die Grenzwerte rezeptspezifisch, also in Abhängigkeit von den zuzubereitenden Lebensmitteln und/oder der Betriebsweise der Küchenmaschine 1, insbesondere des Heizsystems 20H, angepasst.

Beispielsweise ist die Differenz zwischen der Heiztemperatur HT und der Messtemperatur MT umso größer, je höher die an dem Heizelement 20E anliegende elektrische Leistung ist, da sich das Heizelement 20E schneller aufheizt als die thermisch trägere Heizplatte 20P. Darüber hinaus kann ein Lebensmittel, wie Wasser, durch die Siedetemperatur die maximale Heiztemperatur HT bzw. Messtemperatur MT begrenzen (Kühlwirkung).

Für diese Fälle können folglich unterschiedliche Grenzwert bzw. Kriterien K1-K3 festgelegt werden. Insbesondere können sinnvolle Grenzwerte für zulässige Heizzustände definiert werden, wenn für die maximal mögliche elektrische Leistung und verschiedene Lebensmittel bzw. Lebensmittelklassen die höchst vorkommende Differenz zwischen der Heiztemperatur HT und der Messtemperatur MT bekannt ist.

Wenn ein kritischer Heizzustand HA identifiziert wird bzw. ist, wird bzw. werden - vorzugsweise in einem weiteren bzw. vierten Verfahrensschritt S4 insbesondere automatisch ein oder mehrere (Gegen-)Maßnahmen ergriffen bzw. der Betrieb der Küchenmaschine 1 insbesondere des Heizsystems 20H und/oder des Elektromotors 10E, angepasst, um eine Vergleichmäßigung der Temperaturen zu erzielen und beispielsweise ein Anbrennen des Lebensmittels zu verhindern.

Vorzugsweise wird bei bzw. (unmittelbar) nach Identifizierung eines kritischen Heizzustands HA ein Rührvorgang mittels des Rührers 20R und/oder ein Heizvorgang mittels des Heizsystems 20H durchgeführt, gestartet, beendet und/oder angepasst, insbesondere um die Heiztemperatur HT und die Messtemperatur MT wieder anzunähern bzw. zu vergleichmäßigen.

Beispielsweise ist es möglich, bei bzw. (unmittelbar) nach Identifizierung des kritischen Heizzustands HA den Rührer 20R zu aktivieren und/oder die Drehzahl des Elektromotors 10E zu erhöhen. Dies ist besonders effektiv bei der Zubereitung eines inhomogenen Lebensmittels bzw. von Stückgut.

Zusätzlich oder alternativ kann die Wärmeleistung des Heizsystems 20H zumindest temporär reduziert und/oder softwaretechnisch begrenzt werden. Insbesondere ist es möglich, die Zieltemperatur für eine definierte Zeit herabzusetzen und/oder das Heizsystem 20H zumindest temporär bzw. für eine definierte Zeit auszuschalten.

Für den Fall, dass kein gutes bzw. positives Rezeptergebnis aufgrund des kritischen Heizzustands HA möglich sein sollte, beispielsweise wenn der kritische Heizzustand HA für einen vordefinierten Zeitraum vorliegt, kann der Zubereitungsvorgang bzw. die Rezeptzubereitung auch vollständig abgebrochen werden.

In einem optionalen weiteren bzw. fünften Verfahrensschritt S5 wird vorzugsweise überprüft, ob die getroffenen Maßnahmen bzw. die Anpassung des Betriebs der Küchenmaschine 1, insbesondere des Heizsystems 20H, erfolgreich war bzw. sich die Heiztemperatur HT und die Messtemperatur MT wieder annähern.

In dem fünften Verfahrensschritt S5 wird folglich eine Validierung bzw. Plausibilitätsprüfung der vorgenommenen Maßnahmen durchgeführt.

Die Validierung bzw. Plausibilitätsprüfung ist vorzugsweise negativ bzw. die Maßnahmen waren nicht erfolgreich, wenn sich die Heiztemperatur HT und die Messtemperatur MT nicht annähern bzw. keine Vergleichmäßigung der Temperaturen erfolgt.

Erfolgt beispielsweise trotz der Aktivierung des Rührers 20R und/oder Deaktivierung des Heizsystems 20H keine Vergleichmäßigung der Heiztemperatur HT und der Messtemperatur MT und/oder liegt weiterhin ein kritischer Heizzustand HA vor, so kann es sich um einen Fehlalarm beispielsweise durch eine fehlerhafte Kalibrierung und/oder zu sensitive Kriterien K1-K3 handeln.

Bei einem Fehlalarm kann vorzugsweise automatisch eine erneute Kalibrierung durchgeführt bzw. der erste Verfahrensschritt S1 wiederholt werden.

Zusätzlich oder alternativ ist es möglich, die Grenzwerte bzw. Kriterien K1-K3 anzupassen bzw. zu korrigieren, insbesondere um die Sensitivität zu reduzieren. Vorzugsweise wird die Anpassung der Grenzwerte bzw. Kriterien K1-K3 in einem weiteren bzw. sechsten Verfahrensschritt S6 durchgeführt.

Beispielsweise können größere Unterschiede zwischen der Heiztemperatur HT und der Messtemperatur MT und/oder zwischen den Gradienten der Heiztemperatur HT und der Messtemperatur MT bei der Überprüfung der Kriterien K1-K3 als zulässig definiert werden.

Auch ist es möglich, dass ein weiteres Kriterium der Kriterien K1-K3 bzw. mehrere Kriterien K1-K3 gleichzeitig erfüllt sein müssen, damit ein kritischer Heizzustand HA als solcher identifiziert wird.

Insbesondere bei wiederholten Fehlalarmen ist es auch möglich, den Vergleich der Heiztemperatur HT und der Messtemperatur MT beispielsweise für den aktuellen Zubereitungsvorgang zu ignorieren bzw. abzuschalten.

Mittels der vorschlagsgemäßen Küchenmaschine 1 bzw. des vorschlagsgemäßen Verfahrens können Temperaturinhomogenitäten in der Küchenmaschine 1 bzw. im Zubereitungsraum ZR, beispielsweise durch eine Schiefstellung der Küchenmaschine 1, durch inhomogene Lebensmittel und/oder lokal trockene Stellen auf der Heizplatte 20P, frühzeitig und/oder präzise bzw. sicher - insbesondere ohne weitere Hilfsmittel bzw. Sensorik - identifiziert und durch entsprechende Gegenmaßnamen reduziert werden. Insbesondere kann eine Beschädigung der Küchenmaschine 1, beispielsweise durch anbrennende Lebensmittel, vermieden werden.

Einzelne Aspekte, Merkmale und Verfahrensschritte der vorliegenden Erfindung können unabhängig, aber auch in beliebiger Kombination und/oder Reihenfolge realisiert werden.

Weitere, auch unabhängig oder in beliebiger Kombination realisierbare Aspekte sind im Folgenden aufgelistet:

1. Verfahren zum Betreiben eines elektrischen Heizsystems einer Küchenmaschine, wobei der elektrische Widerstand eines Heizelements des Heizsystems zur Bestimmung einer Heiztemperatur des Heizelements ermittelt wird, wobei zusätzlich eine Messtemperatur des Heizsystems mittels eines Temperaturelements ermittelt wird, um eine Kalibrierung des Heizsystems durchzuführen und/oder um die Messtemperatur mit der Heiztemperatur zur Identifikation eines kritischen Heizzustands des Heizsystems zu vergleichen.

2. Verfahren nach Aspekt 1, wobei das Heizelement eine erste Messstelle für die Heiztemperatur und das Temperaturelement eine zweite Messstelle für die Messtemperatur aufweist oder bildet.

3. Verfahren nach Aspekt 2, wobei die erste Messstelle größer als die zweite Messstelle ist und/oder die zweite Messstelle näher an einem Zubereitungsraum der Küchenmaschine angeordnet ist als die erste Messstelle.

4. Verfahren nach einem der voranstehenden Aspekte, wobei zur Kalibrierung ein elektrischer Widerstandswert des Heizelements und ein zum Widerstandswert korrespondierender Heiztemperaturwert des Heizelements als Referenzwerte ermittelt werden.

5. Verfahren nach einem der voranstehenden Aspekte, wobei zur Kalibrierung mehrere elektrische Widerstandwerte des Heizelements und zu den Widerstandswerten korrespondierende Heiztemperaturwerte des Heizelements ermittelt werden, um einen Temperaturkoeffizienten des Heizelements zu bestimmen.

6. Verfahren nach Aspekte 4 oder 5, wobei der Heiztemperaturwert bzw. die Heiztemperaturwerte mittels des Temperaturelements bestimmt wird bzw. werden, vorzugsweise dadurch, dass ein mittels des Temperaturelements ermittelter Messtemperaturwert in den Heiztemperaturwert umgerechnet wird.

7. Verfahren nach einem der voranstehenden Aspekte, wobei die Kalibrierung automatisch nach dem Starten des Heizsystems bzw. der Küchenmaschine und/oder für jeden Heizvorgang durchgeführt wird.

8. Verfahren nach einem der voranstehenden Aspekte, wobei beim Betrieb des Heizsystems die Differenz der Gradienten der Heiztemperatur und der Messtemperatur, die Differenz der Heiztemperatur und der Messtemperatur und/oder die Heiztemperatur bzw. die Messtemperatur mit einem oder mehreren Grenzwerten verglichen werden/wird, um den kritischen Heizzustand des Heizsystems, insbesondere eine lokale Temperaturveränderung des Heizelements, zu identifizieren.

9. Verfahren nach Aspekt 8, wobei der Grenzwert bzw. die Grenzwerte rezeptspezifisch angepasst wird bzw. werden.

10. Verfahren nach einem der voranstehenden Aspekte, wobei bei Identifizierung des kritischen Heizzustands der Betrieb der Küchenmaschine, insbesondere des Heizsystems, angepasst wird.

11. Verfahren nach einem der voranstehenden Aspekte, wobei bei Identifizierung des kritischen Heizzustands ein Rührvorgang und/oder ein Heizvorgang durchgeführt, gestartet, beendet und/oder angepasst wird.

12. Verfahren nach einem der voranstehenden Aspekte, wobei eine weitere Messtemperatur des Heizsystems mittels eines weiteren Temperaturelements ermittelt wird, um die Heiztemperatur mit mehreren Messtemperaturen zur Identifikation des kritischen Heizzustands zu vergleichen.

13. Verwendung einer mittels eines Temperaturelements eines Heizsystems ermittelten Messtemperatur und einer mittels eines Heizelements des Heizsystems ermittelten Heiztemperatur zur Identifikation eines kritischen Heizzustands des Heizsystems, bei dem das Heizelement eine lokale Temperaturveränderung aufweist.

14. Küchenmaschine zur Zubereitung von Speisen, wobei die Küchenmaschine ein elektrisches Heizsystem zum Erhitzen eines Gefäßes aufweist, wobei das Heizsystem eine Heizplatte, ein elektrisches Heizelement zum Erhitzen der Heizplatte, eine Messeinrichtung zum Messen des elektrischen Widerstands des Heizelements und ein Temperaturelement zum Ermitteln einer Messtemperatur der Heizplatte aufweist, wobei die Küchenmaschine zur Durchführung des Verfahrens nach einem der Aspekte 1 bis 12 und/oder zur Verwendung gemäß Aspekt 13 ausgebildet ist.

15. Küchenmaschine nach Aspekt 14, wobei die Küchenmaschine ein weiteres Temperaturelement zum Ermitteln einer weiteren Messtemperatur der Heizplatte aufweist.

**Bezugszeichenliste:**

| | | | |
|---|---|---|---|
| 1 | Küchenmaschine | A | Mittelachse |
| 10 | Basisstation | HA | kritischer Heizzustand |
| 10A | Aufnahme | HT | Heiztemperatur |
| 10B | Eingabeeinrichtung | HT1 | erster Heiztemperaturwert |
| 10C | Netzkabel | HT2 | zweiter Heiztemperaturwert |
| 10D | Anzeigeeinrichtung | I | Stromstärke |
| 10E | Elektromotor | I1 | erster Stromstärkewert |
| 10K | Kommunikationseinrichtung | I2 | zweiter Stromstärkewert |
| 10M | Messeinrichtung | K1 | erstes Kriterium |
| 10N | Netzteil | K2 | zweites Kriterium |
| 10R | Datenverarbeitungseinrichtung | K3 | drittes Kriterium |
| 10S | Steuereinrichtung | M1 | erste Messstelle |
| 10U | Benutzerschnittstelle | M2 | zweite Messstelle |
| 10W | Welle | MT | Messtemperatur |
| 10X | erster elektrischer Anschluss | R | Widerstand |
| 10Y | zweiter elektrischer Anschluss | R1 | erster Widerstandswert |
| | | R2 | zweiter Widerstandswert |
| 20 | Gefäß | S1 | erster Verfahrensschritt |
| 20A | Öffnung | S2 | zweiter Verfahrensschritt |
| 20B | Boden | S3 | dritter Verfahrensschritt |
| 20D | Deckel | S4 | vierter Verfahrensschritt |
| 20E | Heizelement | S5 | fünfter Verfahrensschritt |
| 20F | Heizfläche | S6 | sechster Verfahrensschritt |
| 20G | Griff | TCR | Temperaturkoeffizient |
| 20H | Heizsystem | t | Zeit |
| 20K | Kontaktfläche | t1 | erster Zeitpunkt |
| 20P | Heizplatte | t2 | zweiter Zeitpunkt |
| 20Q | Heizeinrichtung | tx | Zeitkonstante |
| 20R | Rührer | T | Temperatur |
| 20S | Trägerschicht | Tx | Temperaturkonstante |
| 20T | Temperaturelement | U | Spannung |
| 20W | Wandung | U1 | erster Spannungswert |
| 20X | erster elektrischer Anschluss | U2 | zweiter Spannungswert |
| 20Y | zweiter elektrischer Anschluss | ZR | Zubereitungsraum |

**Patentansprüche**

1. Verfahren zum Betreiben eines elektrischen Heizsystems (20H) einer Küchenmaschine (1), **dadurch gekennzeichnet,**

**dass** zur Bestimmung einer Heiztemperatur (HT) des Heizelements (20E) der elektrische Widerstand (R) eines Heizelements (20E) des Heizsystems (20H) ermittelt wird, und
**dass** eine mittels eines Temperaturelements (20T) ermittelte Messtemperatur (MT) des Heizsystems (20H) mit der mittels des Heizelements (20E) bestimmten Heiztemperatur (HT) verglichen wird, um einen kritischen Heizzustand (HA) des Heizsystems (20H) zu identifizieren, wobei bei Identifizierung des kritischen Heizzustands (HA) der Betrieb der Küchenmaschine (1) angepasst wird.

2. Verfahren nach Anspruch 1, **dadurch gekennzeichnet, dass** das Heizelement (20E) eine erste Messstelle (M1) für die Heiztemperatur (HT) und das Temperaturelement (20T) eine zweite Messstelle (M2) für die Messtemperatur (MT) aufweist oder bildet, wobei die erste Messstelle (M1) größer als die zweite Messstelle (M2) ist und/oder die zweite Messstelle (M2) näher an einem Zubereitungsraum (ZR) der Küchenmaschine (1) angeordnet ist als die erste Messstelle (M1).

3. Verfahren nach Anspruch 1 oder 2, **dadurch gekennzeichnet, dass** die Messtemperatur (MT) des Heizsystems (20H) mittels des Temperaturelements (20T) ermittelt wird, um eine Kalibrierung des Heizsystems (20H) durchzuführen, wobei zur Kalibrierung ein elektrischer Widerstandswert (R1, R2) des Heizelements (20E) und ein zum Widerstandswert (R1, R2) korrespondierender Heiztemperaturwert (HT1, HT2) des Heizelements (20E) als Referenzwerte ermittelt werden.

4. Verfahren nach Anspruch 3, **dadurch gekennzeichnet, dass** zur Kalibrierung mehrere elektrische Widerstandwerte (R1, R2) des Heizelements (20E) und zu den Widerstandswerten (R1, R2) korrespondierende Heiztemperaturwerte (HT1, HT2) des Heizelements (20E) ermittelt werden, um einen Temperaturkoeffizienten des Heizelements (20E) zu bestimmen.

5. Verfahren nach einem der voranstehenden Ansprüche, **dadurch gekennzeichnet, dass** beim Betrieb des Heizsystems (20H) die Differenz der Gradienten der Heiztemperatur (HT) und der Messtemperatur (MT) mit einem oder mehreren Grenzwerten verglichen wird, um den kritischen Heizzustand (HA) des Heizsystems (20H), insbesondere eine lokale Temperaturveränderung des Heizelements (20E), zu identifizieren.

6. Verfahren nach einem der voranstehenden Ansprüche, **dadurch gekennzeichnet, dass** beim Betrieb des Heizsystems (20H) die Differenz der Heiztemperatur (HT) und der Messtemperatur (MT) mit einem oder mehreren Grenzwerten verglichen wird, um den kritischen Heizzustand (HA) des Heizsystems (20H), insbesondere eine lokale Temperaturveränderung des Heizelements (20E), zu identifizieren.

7. Verfahren nach einem der voranstehenden Ansprüche, **dadurch gekennzeichnet, dass** beim Betrieb des Heizsystems (20H) die Heiztemperatur (HT) bzw. die Messtemperatur (MT) mit einem oder mehreren Grenzwerten verglichen wird, um den kritischen Heizzustand (HA) des Heizsystems (20H), insbesondere eine lokale Temperaturveränderung des Heizelements (20E), zu identifizieren.

8. Verfahren nach einem der Ansprüche 5 bis 7, **dadurch gekennzeichnet, dass** der Grenzwert bzw. die Grenzwerte rezeptspezifisch angepasst wird bzw. werden.

9. Verfahren nach einem der voranstehenden Ansprüche, **dadurch gekennzeichnet, dass** bei Identifizierung des kritischen Heizzustands (HA) ein Rührvorgang durchgeführt, gestartet, beendet und/oder angepasst wird.

10. Verfahren nach Anspruch 9, **dadurch gekennzeichnet, dass** bei Identifizierung des kritischen Heizzustands (HA) ein Rührer (20R) der Küchenmaschine (1) aktiviert wird und/oder die Drehzahl eines Elektromotors (10E) der Küchenmaschine (1) erhöht wird.

11. Verfahren nach einem der voranstehenden Ansprüche, **dadurch gekennzeichnet, dass** bei Identifizierung des kritischen Heizzustands (HA) ein Heizvorgang durchgeführt, gestartet, beendet und/oder angepasst wird.

12. Verfahren nach Anspruch 11, **dadurch gekennzeichnet, dass** die Wärmeleistung des Heizsystems (20H) zumindest temporär reduziert wird oder das Heizsystem (20H) zumindest temporär ausgeschaltet wird.

13. Verfahren nach einem der voranstehenden Ansprüche, **dadurch gekennzeichnet, dass** automatisch überprüft wird, ob die Anpassung des Betriebs der Küchenmaschine (1) zu einer Vergleichmäßigung der Temperaturen (MT, HAT) geführt hat.

14. Verfahren nach einem der voranstehenden Ansprüche, **dadurch gekennzeichnet, dass** eine weitere Messtemperatur (MT) des Heizsystems (20H) mittels eines weiteren Temperaturelements ermittelt wird, um die Heiztemperatur (HT) mit mehreren Messtemperaturen (MT) zur Identifikation des kritischen Heizzustands (HA) zu vergleichen.

15. Küchenmaschine (1) zur Zubereitung von Speisen,

wobei die Küchenmaschine (1) ein elektrisches Heizsystem (20H) zum Erhitzen eines Gefäßes (20), eine Datenverarbeitungseinrichtung (10R) und eine Steuereinrichtung (10S) zum Steuern des Heizsystems (20H) aufweist,

wobei das Heizsystem (20H) eine Heizplatte (20P), ein elektrisches Heizelement (20E) zum Erhitzen der Heizplatte (20P) und ein Temperaturelement (20T) zum Ermitteln einer Messtemperatur (MT) der Heizplatte (20P) aufweist,

**dadurch gekennzeichnet,**

**dass** das Heizsystem (20H) eine Messeinrichtung (10M) zum Messen des elektrischen Widerstands (R) des Heizelements (20E) aufweist, und

**dass** die Küchenmaschine (1) zur Durchführung des Verfahrens nach einem der Ansprüche 1 bis 14 mittels des Heizsystems (20H), der Datenverarbeitungseinrichtung (10R) und der Steuereinrichtung (10S) ausgebildet ist.

Fig. 1

Fig. 2

Fig. 3

Fig. 4

EP 4 190 212 A1

Fig. 5

Fig. 6

Fig. 7

EP 4 190 212 A1

Europäisches
Patentamt

European
Patent Office

Office européen
des brevets

**EUROPÄISCHER RECHERCHENBERICHT**

**Nummer der Anmeldung**

**EP 23 15 3370**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | EP 3 513 698 A1 (VORWERK & CO INTERHOLDING GMBH) 24. Juli 2019 (2019-07-24) * Absätze [0002], [0020], [0024] * ----- | 1-15 | INV. A47J36/32 A47J43/07 |
| A | EP 3 338 598 A2 (VORWERK & CO INTERHOLDING GMBH) 27. Juni 2018 (2018-06-27) * Absätze [0016], [0026], [0027], [0036] * ----- | 1-3, 10-15 | |
| A | DE 10 2010 037769 A1 (VORWERK & CO INTERHOLDING GMBH) 29. März 2012 (2012-03-29) * Absatz [0027] – Absatz [0033] * ----- | 1-3, 10-15 | |

| | RECHERCHIERTE SACHGEBIETE (IPC) |
|---|---|
| | A47J |

Der vorliegende Recherchenbericht wurde für alle Patentansprüche erstellt

| Recherchenort | Abschlußdatum der Recherche | Prüfer |
|---|---|---|
| München | 28. April 2023 | Reichhardt, Otto |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.............................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 15 3370

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-04-2023

| Im Recherchenbericht angeführtes Patentdokument | Datum der Veröffentlichung | Mitglied(er) der Patentfamilie | Datum der Veröffentlichung |
|---|---|---|---|
| EP 3513698 A1 | 24-07-2019 | CN 110049581 A | 23-07-2019 |
| | | EP 3513698 A1 | 24-07-2019 |
| | | EP 4088631 A1 | 16-11-2022 |
| | | ES 2927247 T3 | 03-11-2022 |
| | | PL 3513698 T3 | 21-11-2022 |
| | | US 2019223258 A1 | 18-07-2019 |
| | | US 2023116252 A1 | 13-04-2023 |
| EP 3338598 A2 | 27-06-2018 | AU 2018200033 A1 | 12-07-2018 |
| | | CN 108236351 A | 03-07-2018 |
| | | DE 102016125678 A1 | 28-06-2018 |
| | | EP 3338598 A2 | 27-06-2018 |
| | | ES 2827237 T3 | 20-05-2021 |
| | | PL 3338598 T3 | 11-01-2021 |
| | | PT 3338598 T | 07-09-2020 |
| | | TW 201822693 A | 01-07-2018 |
| | | US 2018177340 A1 | 28-06-2018 |
| DE 102010037769 A1 | 29-03-2012 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3513698 A1